# EUROPEAN PATENT SPECIFICATION

(11) **EP 2 003 641 B1**
(45) Date of publication and mention of the grant of the patent: **06.03.2013**
(21) Application number: 07740259.2
(22) Date of filing: 29.03.2007
(51) Int. Cl.: G10L 15/00, G01C 21/00, G06F 17/30, G08G 1/0969, G09B 29/10, G10L 15/22, G01C 21/36

(54) **VOICE INPUT SUPPORT DEVICE, METHOD THEREOF, PROGRAM THEREOF, RECORDING MEDIUM CONTAINING THE PROGRAM, AND NAVIGATION DEVICE**
SPRACHEINGABEHILFSVORRICHTUNG, ENTSPRECHENDES VERFAHREN, ENTSPRECHENDES PROGRAMM, AUFZEICHNUNGSMEDIUM, DAS DAS PROGRAMM ENTHÄLT, UND NAVIGATIONSVORRICHTUNG
DISPOSITIF DE SUPPORT D'ENTREE VOCALE, PROCEDE CORRESPONDANT, PROGRAMME CORRESPONDANT, SUPPORT D'ENREGISTREMENT CONTENANT LE PROGRAMME ET DISPOSITIF DE NAVIGATION

(30) Priority: 31.03.2006 JP 2006099596
(43) Date of publication of application: 17.12.2008
(73) Proprietor: Pioneer Corporation, Kanagawa 212-0031 (JP)
(72) Inventor: KAJI, Masayo, Tsurugashima-shi, Saitama; 350-2288 (JP)
(74) Representative: Haley, Stephen
(86) International application number: PCT/JP2007/056821
(87) International publication number: WO 2007/114226

(56) References cited:
- WO-A1-2004/104520
- JP-A- 2003 241 790
- JP-A- 2004 233 542
- JP-A- 2004 233 542
- JP-A- 2006 033 795
- JP-A- 2006 048 566
- US-A1- 2003 144 846

## Description

### Technical Field

The present invention relates to a voice-input assisting unit for inputting setting items for navigating a traveling of a vehicle from a departure point to a destination into a navigator through a voice input, a method thereof, a program thereof, a recording medium containing the program and a navigator.

### Background Art

According to a known arrangement, a navigation device for searching travel routes of a vehicle and navigating a traveling of the vehicle is operated by, for instance, voice inputs (see, for instance, patent document 1).
According to the arrangement disclosed in the patent document 1, a user switches on a talk switch to activate a voice recognizing processor for voice retrieval, and speaks a word for indicating operation information into a microphone. The microphone converts a voice uttered by the user into an electric audio signal, and inputs the converted signal into the voice recognizing processor. The voice recognizing processor recognizes the word spoken by the user based on the audio signal, and outputs the recognition result to an arithmetic processor. At this time, the voice recognizing processor obtains, for instance, five candidate words as the most probable words (i.e., the words predicted as the first candidate group), and outputs a candidate list in which the five words are lined up in the descending order of the probability as the recognition result. Then, the arithmetic processor determines operation information based on the first candidate word (i.e., the most probable word) of the candidate list, and executes a processing in accordance with the operation information.

Patent Document 1: JP-A-9-50291
JP2004233542A discloses a vehicle navigation device which utilises voice recognition and which builds a database by associating unrecognised spoken words with known synonyms selected by a user. US20030144846A discloses a voice application platform enabling a user to use familiar terms or commands to interact with an application by performing conversion between the user response and the response expected by the application.

### Disclosure of the Invention

### Problems to Be Solved by the Invention

An in-vehicle navigation device, for instance, is installed in the vicinity of a dashboard of a vehicle for the sake of usability. However, it is difficult to install a large-size device in the vicinity of the dashboard while a front field of view is ensured because various devices and parts necessary for driving the vehicle such as a speed meter and a steering wheel are disposed in the vicinity thereof. Thus, downsizing of the navigation device has been demanded.
In addition, recently-ongoing diversification of functions in the navigation device has led to demands for further enhanced usability.

In view of such problems, an object of the invention is to provide a more usable voice-input assisting unit with a simplified arrangement, a method thereof, a program thereof, a recording medium containing the program and a navigation device.

### Means for Solving the Problems

In a first aspect, the invention as defined in claim 1 consists in a voice-input assisting unit for use in a navigator, the navigator navigating a movable body travelling from a departure point to a destination point based on map information, a menu item from an operating menu for navigating the movable body being input to the navigator through a voice input, the navigator including:
a conversion database having a table structure that stores, using a common data structure, a plurality of menu items, each particular menu item having associated therewith related-word information comprising words related to the particular menu item; and
a related menu items selecting database having a table structure that stores, using a data structure, the menu items each having associated therewith menu item-explaining information being an explanation of the menu item and operation-content information being information about an operation for executing the menu item;
the voice-input assisting unit comprising:
   an audio-signal acquirer that acquires an audio signal corresponding to the voice input;
   a menu item selector that, based on the audio signal and the menu items in the conversion database, computes a probability that the voice input matches a menu item and retrieves a selected menu item in a manner corresponding to the probability;
   a related menu item selector that retrieves, from the related menu items selecting database, a related other menu item based on the menu item-explaining information and the operation-content information associated with the selected retrieved menu item; and
   a notification controller that associates the menu item selected by the menu item selector with the related other menu item retrieved by the related menu item selector and controls a notifier to request that at least one of the menu item and the related other menu item be confirmed.

In a second aspect, the invention as defined in claim 12 consists in a method of assisting a voice input for use in a navigator, the navigator navigating a movable body travelling from a departure point to a destination point based on map information, a menu item from an operating menu for navigating the movable body being input to the navigator through a voice input, the method comprising:
using: a conversion database having a table structure that stores, using a common data structure, a plurality of menu items, each particular menu item having associated therewith related-word information comprising words related to the particular menu item; and a related menu items selecting database having a table structure that stores, using a common data structure, the menu items each having associated therewith menu item-explaining information being an explanation of the menu item and operation-content information being information about an operation for executing the menu item;
acquiring an audio signal output by a sound collector, the audio signal corresponding to the voice input;
computing a probability that the voice input matches a menu item, based on the audio signal and the menu items in the conversion database, and retrieving a selected menu item in a manner corresponding to the probability;
retrieving, from the related menu items selecting database, a related other menu item based on the menu item-explaining information and the operation-content information associated with the selected retrieved menu item; and
associating the menu item having been selected with the related other menu item, and controlling a notifier to request that at least one of the menu item and the related other menu item be confirmed.

A voice-input assisting program according to a still further aspect of the invention as defined in claim 13 is a program for operating an operation unit to execute the above-described method of assisting a voice input.

A recording medium according to a still further aspect of the invention as defined in claim 14 is a program in which the above-described voice-input assisting program is stored in a manner readable by an operation unit.

According to a still further aspect, the invention consists in a navigator, comprising:
a sound collector that outputs an audio signal corresponding to a voice input;
the voice-input assisting unit according to the first aspect for acquiring the audio signal output by the sound collector, the audio signal corresponding to the voice input;
a travel-status retriever for retrieving a travel status of a movable body; and
a navigation notification controller for conducting navigation based on a menu item input by the voice-input assisting unit and map information, the navigation notification controller controlling a notifier to notify a travel state of the movable body in accordance with the travel status of the movable body retrieved by the travel-status retriever.

### Brief Description of Drawings

Fig. 1 is a block diagram schematically showing an arrangement of a navigation device according to an exemplary embodiment of the invention.
Fig. 2 is a conceptual diagram schematically showing a table structure of display data for forming map information according to the exemplary embodiment.
Fig. 3 is a conceptual diagram schematically showing a table structure of matching data for forming the map information according to the exemplary embodiment.
Fig. 4 is a conceptual diagram schematically showing a table structure of a conversion database according to the exemplary embodiment.
Fig. 5 is a conceptual diagram schematically showing a table structure of a setting-item database according to the exemplary embodiment.
Fig. 6 is an explanatory illustration hierarchically showing a processing system of setting items inputted through input operations by a user according to the exemplary embodiment.
Fig. 7 is an explanatory illustration for exemplarily showing relevancy determination and data association of a setting item of "set destination" in order to explain contents of processing for associating other setting items related to the setting items according to the exemplary embodiment.
Fig. 8 is another explanatory illustration for exemplarily showing relevancy determination and data association of a setting item of "use highway" in order to explain the contents of the processing for associating other setting items related to the setting items according to the exemplary embodiment.
Fig. 9 is a still further explanatory illustration for exemplarily showing relevancy determination and data association of a setting item of "use standard map" in order to explain the contents of the processing for associating other setting items related to the setting items according to the exemplary embodiment.
Fig. 10 is a still further explanatory illustration for exemplarily showing relevancy determination and data association of a setting item of "listen to favorite music" in order to explain the contents of the processing for associating other setting items related to the setting items according to the exemplary embodiment.
Fig. 11 is an explanatory illustration showing a screen display for requesting a user to confirm setting inputs according to the exemplary embodiment, in which a list of the setting items and other setting items related to the setting items is displayed in an associated manner for displaying other candidates.
Fig. 12 is a flow chart showing the entire processing operation required for inputting and setting the setting items through voice inputs according to the exemplary embodiment.
Fig. 13 is a flow chart showing a processing operation for selecting the setting items based on the voice inputs according to the exemplary embodiment.
Fig. 14 is a flow chart showing a processing operation for determining similarity in selecting other setting items related to the setting items according to the exemplary embodiment.
Fig. 15 is a flow chart showing a processing operation for determining correlation in selecting other setting items related to the setting items according to the exemplary embodiment.

### Explanation of Codes

- 100······: navigation device
- 110······: sensor section (travel-status retriever)
- 130······: operating section
- 140······: display (notifier)
- 150······: sound generator (notifier)
- 160······: sound collector
- 172······: conversion database
- 173······: setting-item database
- 180······: operation unit
- 181.......: voice-input assisting processor in form of operation unit (voice-input assisting unit)
- 181A······: audio-signal acquirer
- 181B···: travel-status-information acquirer
- 181C···: operation-status-information acquirer
- 181D···: setting-item selector
- 181E···: related-item selector
- 181F···: notification controller
- 182....: navigation controller serving also as navigation notification controller
- 200······: conversion information
- 210······: setting-name information
- 220······: related-word information
- 300······: setting-item information
- 310······: content explaining information (set-content information)
- 320······: operation explaining information
- 330······: similarity information
- 332······: travel-status information
- 333······: device information
- 340······: correlation information

### Best Mode for Carrying Out the Invention

An exemplary embodiment of the invention will be described below with reference to the attached drawings. This exemplary embodiment will be described by exemplifying a navigation device as an embodiment of a navigator for navigating a traveling vehicle, in which a travel-route searching device according to the invention is included. In the invention, a movable body may be exemplarily a vehicle that travels on a road such as an automobile, a truck or a motorcycle, a vehicle that travels on a track, an aircraft, a vessel or a user who carries the navigation device.

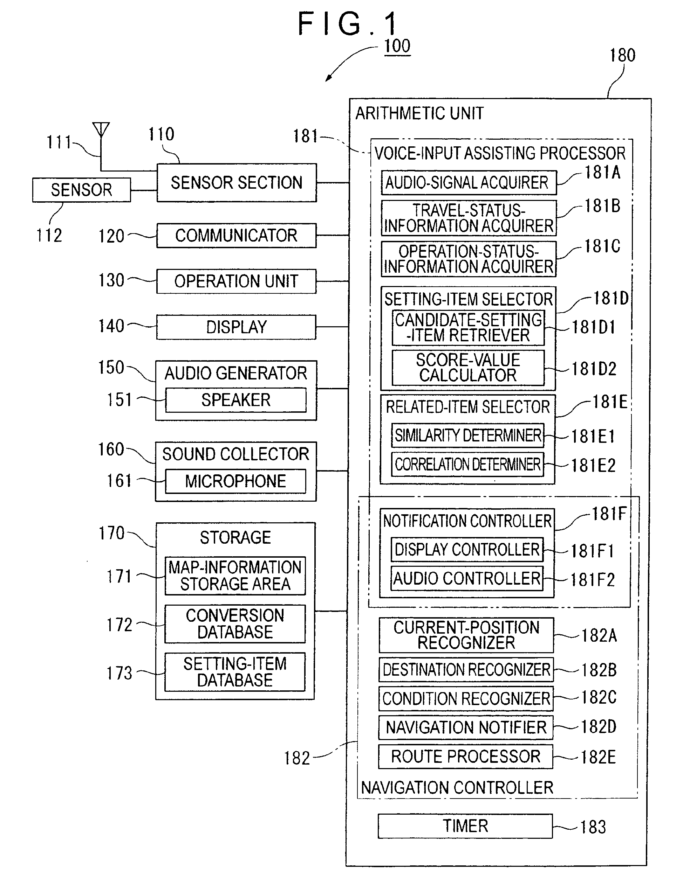

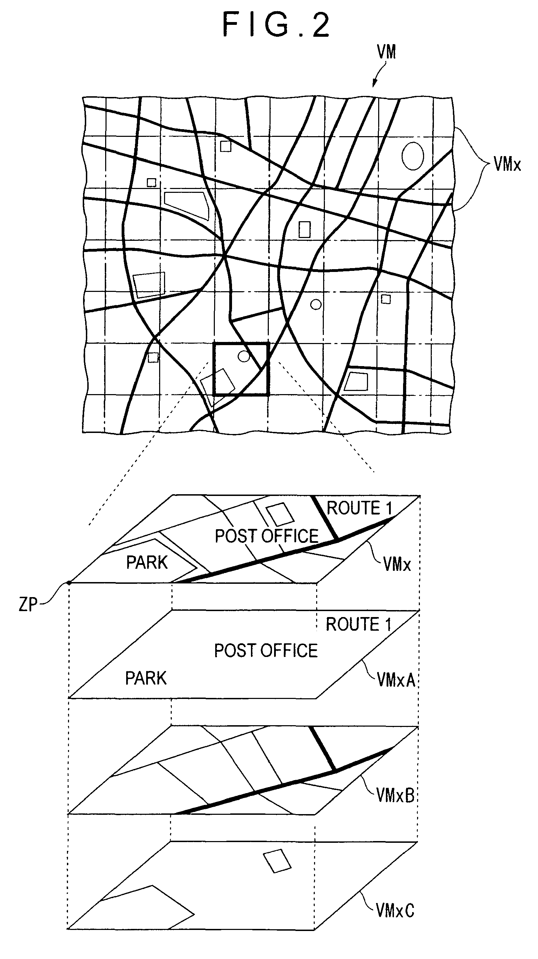

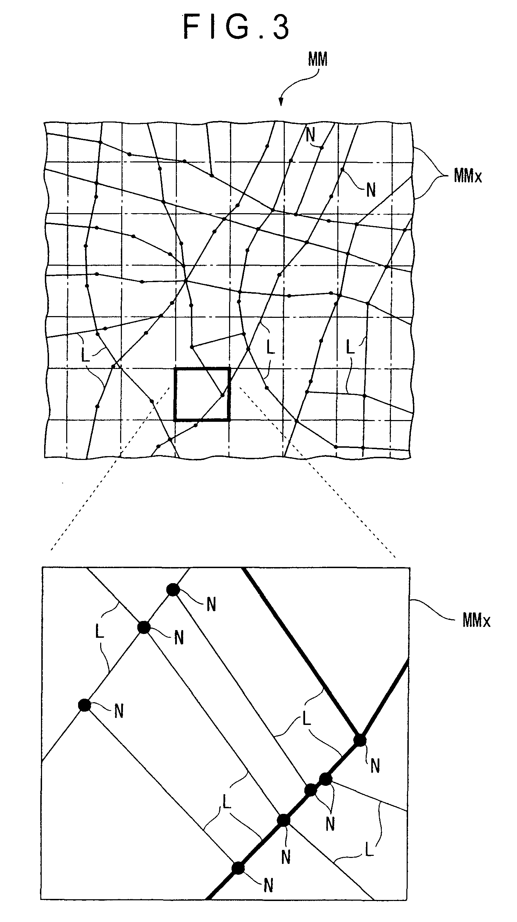

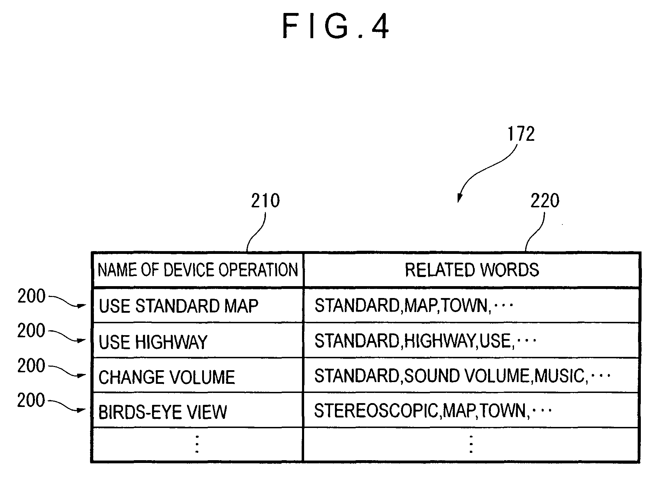

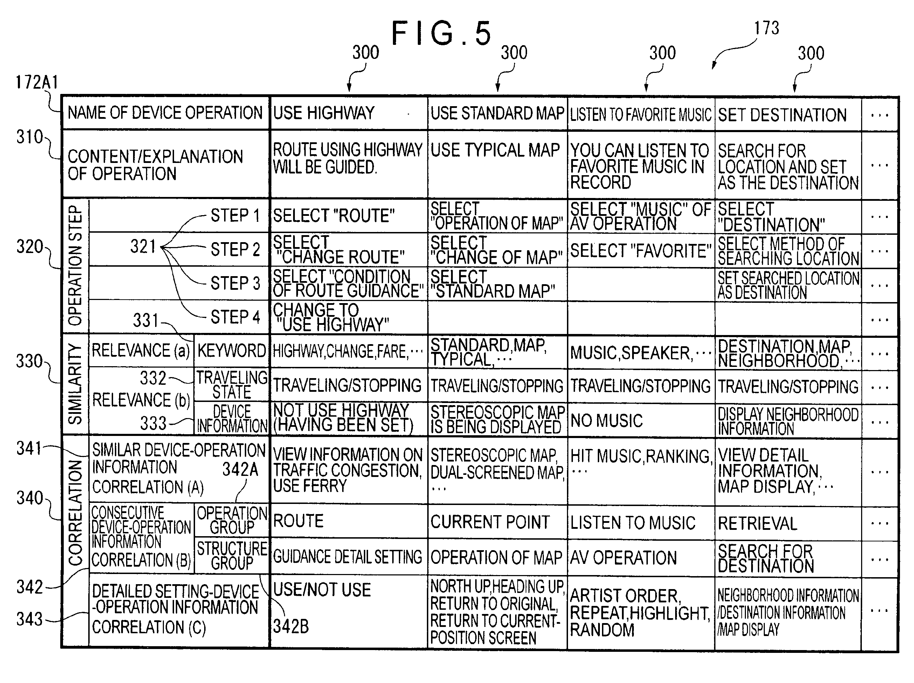

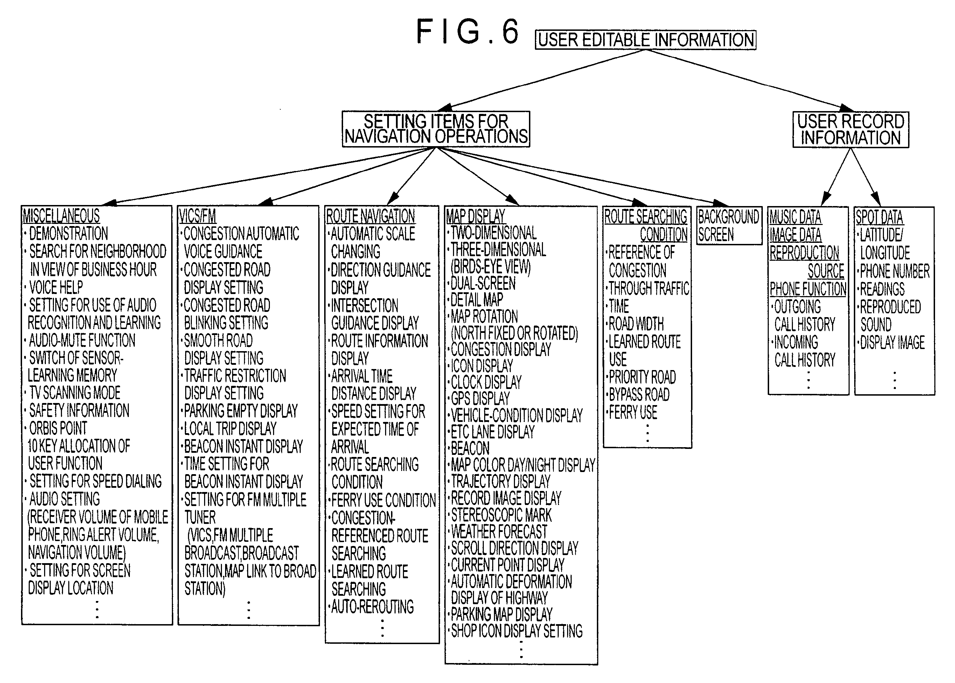

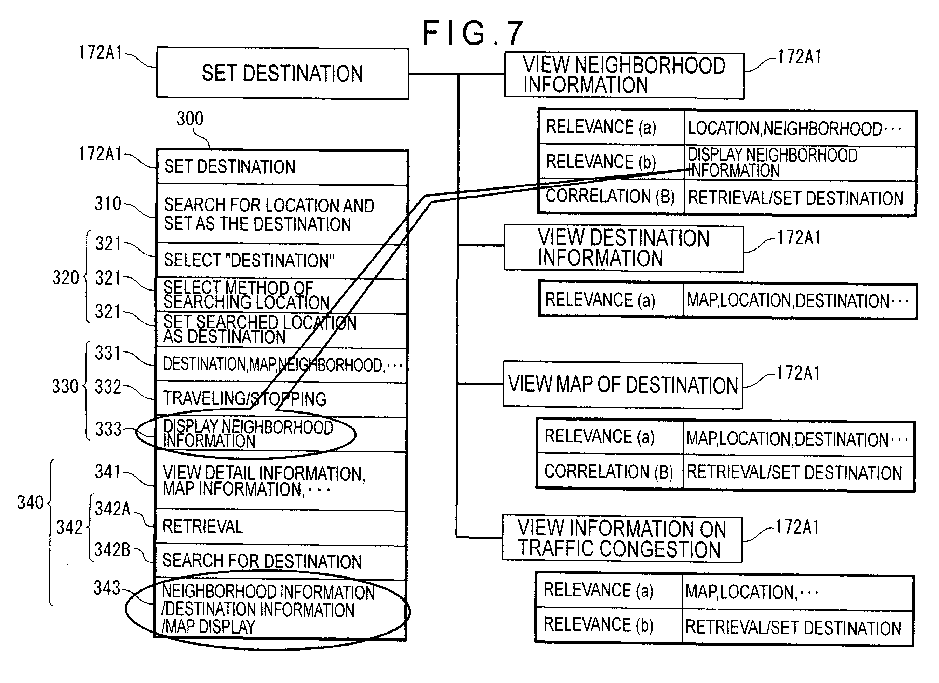

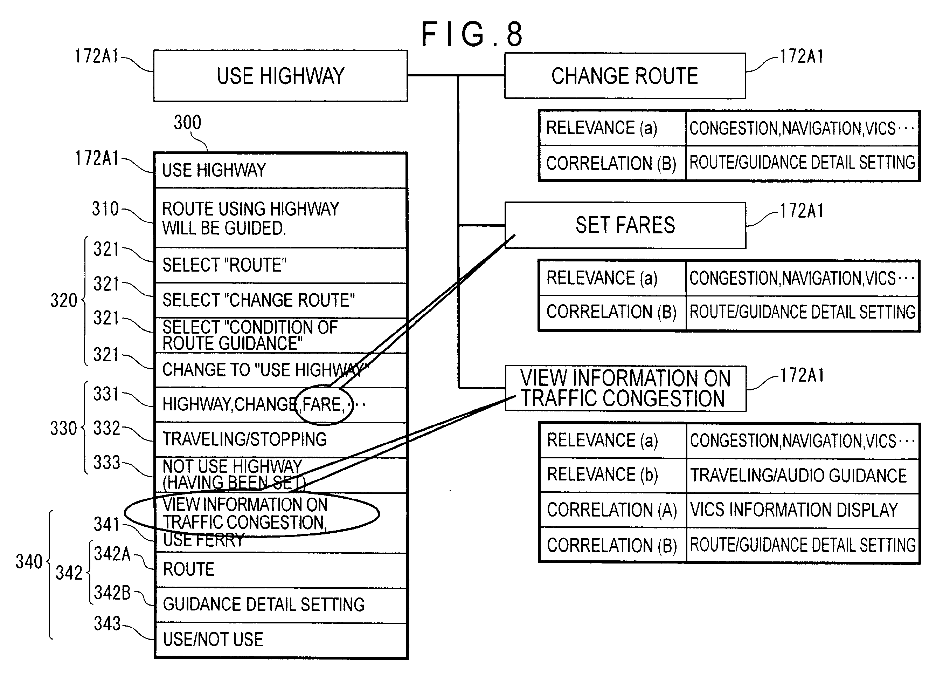

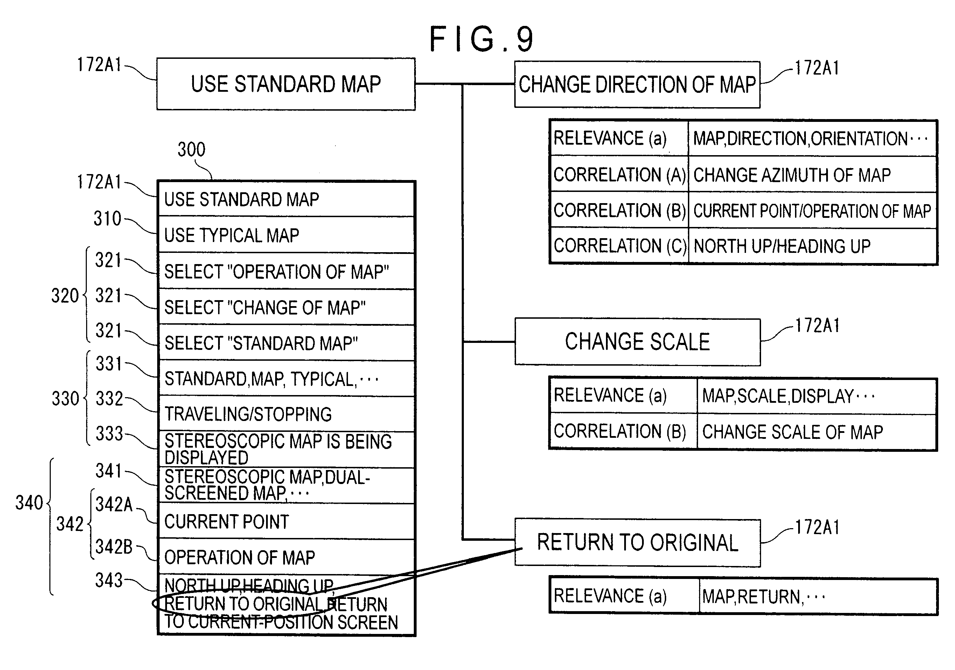

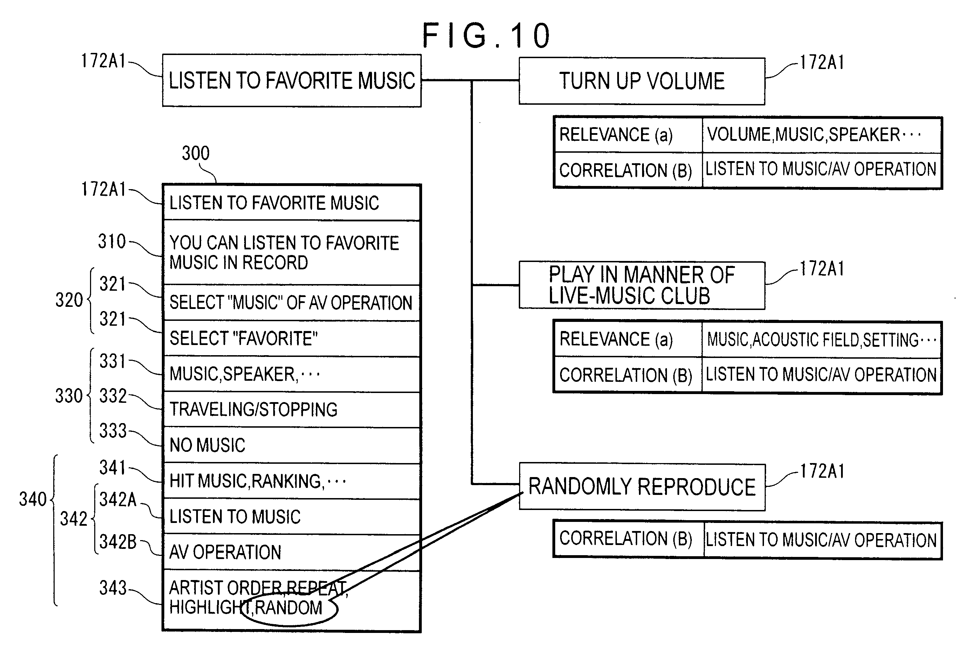

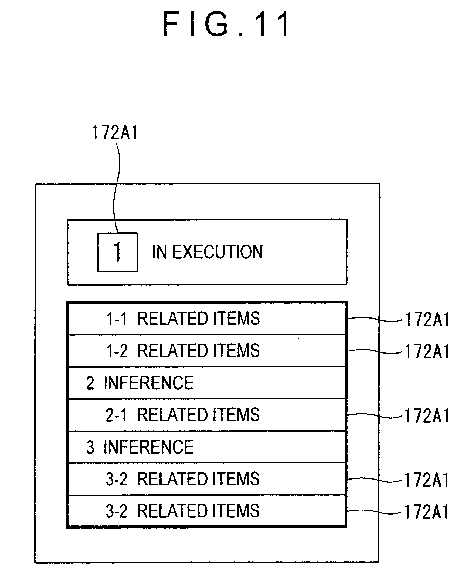

Fig. 1 is a block diagram schematically showing an arrangement of a navigation device. Fig. 2 is a conceptual diagram schematically showing a table structure of display data for forming map information. Fig. 3 is a conceptual diagram schematically showing a table structure of matching data for forming the map information. Fig. 4 is a conceptual diagram schematically showing a table structure of a conversion database. Fig. 5 is a conceptual diagram schematically showing a table structure of a setting-item database. Fig. 6 is an explanatory illustration hierarchically showing a processing system of setting items inputted through input operations by a user. Fig. 7 is an explanatory illustration for exemplarily showing relevancy determination and data association of a setting item of "set destination" in order to explain contents of processing for associating other setting items related to the setting items. Fig. 8 is another explanatory illustration for exemplarily showing relevancy determination and data association of a setting item of "use highway" in order to explain the contents of the processing for associating other setting items related to the setting items. Fig. 9 is a still further explanatory illustration for exemplarily showing relevancy determination and data association of a setting item of "use standard map" in order to explain the contents of the processing for associating other setting items related to the setting items. Fig. 10 is a still further explanatory illustration for exemplarily showing relevancy determination and data association of a setting item of "listen to favorite music" in order to explain the contents of the processing for associating other setting items related to the setting items. Fig. 11 is an explanatory illustration showing a screen display for requesting a user to confirm setting inputs, in which a list of the setting items and other setting items related to the setting items is displayed in an associated manner for displaying other candidates.

### Arrangement of Navigation Device

In Fig. 1, the numeral 100 denotes a navigation device as one embodiment of a navigator. In accordance with a traveling status of a vehicle such as an automobile, the navigation device 100 notifies a user of a guidance on traveling of the automobile to navigate the automobile. The vehicle is not limited to an automobile but may be any vehicle that travels on a road such as a truck or a motorcycle. In addition, the navigation device 100 is not limited to an in-vehicle device installed in, for instance, an automobile, but may be any one of other various devices such as a portable device, a PDA (personal digital assistant), a mobile phone, a PHS (personal handy-phone system) and a portable personal computer.

As shown in Fig. 1, the navigation device 100 exemplarily includes: a sensor section 110 as one embodiment of a travel-status retriever; a communicator 120; an operating section 130; a display 140; a sound generator 150; a sound collector 160; a storage 170; and an operation unit 180.

The sensor section 110 detects a travel status of a movable body such as a vehicle (in other words, retrieves the current position or a traveling state of the movable body) and outputs a predetermined detection signal to the operation unit 180. The sensor section 110 exemplarily includes a non-illustrated GPS (global positioning system) receiver and various sensors 112 such as a speed sensor, an azimuth sensor and an acceleration sensor (none of which is shown).
The GPS receiver receives navigation radio waves outputted from a GPS satellite (i.e., non-illustrated artificial satellite) via a GPS antenna 111. Then, the GPS receiver computes a pseudo coordinate value of the current position based on a signal corresponding to the received navigation radio waves, and outputs the computed result as GPS data to the operation unit 180.
The speed sensor (one of the sensors 112 of the sensor section 110), which is exemplarily mounted on a vehicle, detects a traveling speed and an actual acceleration speed of the vehicle based on a signal that varies in accordance with the traveling speed of the vehicle. The speed sensor reads a pulse signal outputted by, for instance, rotation of an axle or a wheel, or reads a voltage value. Then, the speed sensor outputs the read pulse signal or the read voltage value as the detection signal. The azimuth sensor (another one of the sensors 112), which is mounted on the vehicle, includes a so-called gyro sensor (not shown). The azimuth sensor detects an azimuth of the vehicle, i.e., a traveling direction in which the vehicle is heading, and outputs a detection signal related to the traveling direction. The acceleration sensor (another one of the sensors 112), which is mounted on the vehicle, detects an acceleration of the vehicle in terms of the traveling direction, converts the detected acceleration into, for instance, a sensor output value (i.e., a detection signal based on pulse or a voltage value), and outputs the converted result. The arrangement of the sensors 112 is not limited to the above. The sensors 112 may be arranged to include only one of the speed sensor, the azimuth sensor and the acceleration sensor, any suitable combination thereof, or any other sensor, as long as the travel status of the vehicle is detectable. The various sensors 112 may be mounted on the navigation device 100.

The communicator 120 executes input interface processing that is predetermined relative to a signal inputted through a network (not shown), and outputs the result as a processing signal to the operation unit 180. When the operation unit 180 inputs into the communicator 120 a processing signal that commands the communicator 120 to transmit the signal to a destination such as a server unit (not shown), the communicator 120 executes output interface processing that is predetermined relative to an input processing signal, and outputs the result to the destination such as a server unit through the network.
In addition, the communicator 120 includes a VICS antenna (not shown) for acquiring traffic information about traffic accidents or traffic congestions (hereinafter called as VICS data) from a vehicle information communication system such as a system administered by Vehicle Information Communication System (VICS™) Center Foundation in Japan. Specifically, the communicator 120 acquires the VICS data about traffic congestions, traffic accidents, traffic construction, traffic restriction or the like from the vehicle information communication system through a network such as beacon or FM multiple broadcast. Then, the acquired VICS data is outputted as a predetermined signal to the operation unit 180.
The communicator 120 also receives information such as map information or traffic information transmitted from the server as needed, and suitably outputs the received information to the storage 170 for storage. When the communicator 120 determines that the information has been already acquired with reference to version information or set-time information contained in the transmitted map information or traffic information, the communicator 120 may skip the operation of storing the information.
The network may be: a network based on general-purpose protocol such as TCP (transmission control protocol) or IP (internet protocol), the network being exemplified by the Internet, intranet or LAN (local area network); a network formed by plural base stations between which information is receivable and transmittable via radio medium, the network being exemplified by communication line network or broadcast network; or radio medium itself for intermediating in direct transmission and reception of information between the navigation device 100 and the vehicle information communication system. The radio medium may be any radio medium, examples of which are radio waves, light, sound waves and electromagnetic waves.

The operating section 130 includes various operation buttons and operation knobs (not shown) on which input operations are conducted through a keyboard, a mouse and the like. By the input operations on the operation buttons and the operation knobs, setting items for setting operations of the navigation device 100 are exemplarily inputted. Specifically, the setting items exemplarily include: a setting of contents of to-be-acquired information and conditions for acquiring the information; a setting of a destination; a setting of execution commands for retrieving information and displaying travel status (traveling state) of the vehicle; a setting of execution commands for communication operations (communication-requesting information) to request for acquisition of various information via the network; and a setting of contents of the various to-be-acquired information and conditions for acquiring the various information. With the setting items being input by the input operations, the operating section 130 outputs predetermined operation signals to the operation unit 180 as needed, so that the setting items are inputted.
The input operations on the operating section 130 are not limited to the input operations on the operation buttons and the operation knobs. The input operations may be conducted on the operating section 130 in any manner, as long as the various setting items can be inputted thereinto. For instance, the input operations may be conducted on the operating section 130 by operating a touch panel provided to the display 140, or by use of radio medium transmitted in accordance with input operations on a remote controller.

The display 140 is controlled by the operation unit 180 to display an image-data signal outputted from the operation unit 180 on its screen. Examples of image data contained in the image-data signal are: image data of the map information or retrieval information; TV image data received by a TV receiver (not shown); image data stored in an external unit or in a recording medium such as an optical disc, a magnetic disc or a memory card and read by a drive or driver; and image data from the storage 170.
The display 140 may be any one of various screen-displaying displays such as a liquid crystal panel, an organic EL (electroluminescence) panel, a PDP (plasma display panel), a CRT (cathode-ray tube), a FED (field emission display) and an electrophoretic display panel.

The sound generator 150 exemplarily includes a speaker 151 and a buzzer. The sound generator 150 is controlled by the operation unit 180 to output various signals such as audio data outputted from the operation unit 180. The sound generator 150 outputs the signals in audio form through an audio generating section. Examples of information to be outputted in audio form are information on the traveling direction and the traveling status of the vehicle and traffic conditions. For navigating a traveling of a vehicle, the information is notified to a user such as a passenger.
The sound generator may also output as needed, for instance, TV-audio data received by the TV receiver, audio data stored in a recording medium or the storage 170, or any other audio data. The sound generator 150 may not have to include the speaker 151 but may utilize a speaker 151 installed in the vehicle.

The sound collector 160 acquires (i.e., collects) external sound present around (outside of) the navigation device 100.
The sound collector 160 exemplarily includes a microphone 161 mounted on a dashboard of the vehicle. The sound collector 160, which is connected to the operation unit 180, outputs an audio signal related to the sound collected by the microphone 161 to the operation unit 180.
The microphone 161 may not have to be mounted on the vehicle, but may be mounted on a user in a form of, for instance, a so-called head set, and may output the signal to the operation unit 180 via radio medium.

The storage 170 exemplarily includes: a map-information storage area 171 for storing such map information as shown in Figs. 2 and 3; a conversion database 172 having such a table structure as shown in Fig. 4; and an setting-item database 173 having such a table structure as shown in Fig. 5. The storage 170 stores the various information acquired through the network, setting items inputted through the input operations on the operating section 130 or the sound collector 160, and various contents such as music or video, in a manner readable by the operation unit 180. The storage 170 also stores various programs to be executed on an OS (operating system) for controlling operations of the entire navigation device 100.
The storage 170 may include a drive or driver capable of storing information in a readable manner in various recording medium such as a magnetic disc (e.g., HD(hard disk)), an optical disc (e.g., DVD(digital versatile disc)) or a memory card. Alternatively, the storage 170 may include plural drives or drivers.

The map information stored in the map-information storage area 171 contains: display data VM as exemplarily shown in Fig. 2, which is so-called POI (point of interest) data; matching data MM exemplarily shown in Fig. 3; and map data used for searching a travel route.

The display data VM exemplarily contains plural display-mesh information VMx each of which is appended with its unique number. Specifically, the display data VM is divided into the display-mesh information VMx each concerned with a part of the area, and structured such that the plural display-mesh information VMx is aligned consecutively in the vertical and horizontal directions. The display-mesh information VMx may be further divided as needed into plural low-level display-mesh information VMx each concerned with the part of the area. The display-mesh information VMx each is defined by sides each having a set length to have a rectangular shape. Lengths of the sides each are set by reducing the actual geographical lengths of the area in accordance with a reduced scale of the map. Predetermined corners of the display-mesh information VMx each contains information on the entire map information, for instance, information on an absolute coordinate ZP in a map of the earth.

The display-mesh information VMx exemplarily includes: name-information VMxA about names of intersections and the like; road-information VMxB; and background-information VMxC. The name-information VMxA each is configured as data having such a table structure that arranges other element data of the area (e.g., names of intersections and names of districts) to be displayed at positions predetermined in a positional relationship to the absolute coordinate ZP. The road-information VMxB each is configured as data having such a table structure that arranges road element data of the area (i.e., roads) to be displayed at positions predetermined in a positional relationship to the absolute coordinate ZP. The background-information VMxC each is configured as data having such table structure that arranges other element data (e.g., marks for representing famous places and buildings, and image information for illustrating the famous places and buildings) to be displayed at positions predetermined in a positional relationship to the absolute coordinate ZP.

On the other hand, like the display data VM, the matching data MM is also exemplarily divided into plural matching-mesh information MMx each concerned with a part of the area and added with its unique number. The matching data MM is also structured such that the matching-mesh information MMx is aligned consecutively in the vertical and horizontal directions. The matching-mesh information MMx may be further divided as needed into plural low-level matching-mesh information MMx each concerned with the part of the area. The matching-mesh information MMx each is defined by sides each having a set length to have a rectangular shape. Lengths of the sides each are set by reducing the actual geographical lengths of the area in accordance with a reduced scale of the map. Predetermined corners of the matching-mesh information MMx each contain information on the entire map information, for instance, information of the absolute coordinate ZP in a map of the earth. The matching-mesh information MMx each may have such a data structure that represents an area different from the area represented by the display-mesh information VMx. In other words, the matching-mesh information MMx each may represent the division of the area in a reduced scale that is different from that of the display-mesh information VMx. When the same reducing scale is used, the matching-mesh information MMx can be associated with the display-mesh information VMx by use of the unique numbers. When a differently-reduced scale is used, the matching-mesh information can be associated with the display-mesh information VMx by use of, for instance, the absolute coordinate.
The matching data MM is used in map matching processing. The map matching processing, which is conducted for preventing an indication of the vehicle from erroneously displayed (e.g., preventing an indication of the vehicle from being displayed on a building in place of on a road) exemplarily when the travel status of the vehicle is superposed on the map information in display, so corrects the display as to locate the indication of the vehicle on a road. The matching data MM contains plural link-string-block information.

As shown in Fig. 3, the link-string-block information each is configured as data having such a table structure that plural links L (segment information for forming a road) each for connecting nodes N (spot information each representing a spot) are associated with one another in accordance with a predetermined regularity. Specifically, plural links L are so associated with each other as to form a continuous link string in which the plural links L are continued with each other as if describing a kinked line, in order to represent a road having a predetermined length (e.g., a continuously-extending road such as Koushu Way or Oume Way).
The links L each include: link information (link ID) such as unique number appended for representing a specific link L (segment-unique information); node information such as unique number for representing two nodes connected by a specific link L; and attribute information about characteristics of a road (types of road), the attribute information containing information on tunnels, width of road, grade crossings, elevated roads and the like. In addition, the links L each are associated with a VICS link so that the VICS data corresponds to the map display in terms of positional relationship.
The nodes N each are equivalent to a nodal point such as an intersection, bent point, branch point or junction of the roads. The information on the nodes N exemplarily contains: point-unique information (node ID) such as unique number appended for representing a specific node N contained in the link-string-block information; coordinate information (not shown) for representing a position where a node is positioned; branch information on whether or not a node is a branch point where plural links cross each other (e.g., intersection or branch point); and information on the presence of a traffic signal. Some of the nodes N, in order to merely represent shapes of the roads, only contain the point-unique information and the coordinate information without flag information while others of the nodes N further contain attribute information (i.e., information for representing characteristic structure of the roads such as tunnels or width of road). Note that the nodes N without flag information for merely representing shapes of the roads are not used for determining point identity.
The link-string-block information of the matching data MM is exemplarily associated with information on characteristics of the roads such as the number of lanes, whether or not a road is a main line, types of the roads (e.g., whether a national road, a prefectural road or a toll road) and whether or not a road is inside of a tunnel. By use of the information on characteristics of the roads, the roads can be displayed on the map in a manner corresponding to the display data VM.
The map information used for searching a travel route exemplarily has the same table structure as the matching data MM. Specifically, the map information has such a table structure that contains: point information for representing points, which is similar to the nodes N for representing roads; and segment information about segments connecting the points, which is similar to the links L. In order to search a travel route, the map information is so structured as to represents the roads.

The conversion database 172 is a database for converting words spoken by a user into setting items based on the audio signal acquired by the sound collector 160 through voice inputs. The setting items serve as input operation contents relevant for operating the navigation device 100 in various processing in a manner corresponding to the words spoken by the user. Specifically, as shown in Fig. 4, the conversion database 172 has a table structure that stores plural conversion information 200.
More specifically, the conversion information 200 each is structured such that a setting-name information 210 about a name of a setting item and plural related-word information 220 about words related to a content of the setting item are associated into single data.
Plural setting-name information 210 is provided so as to respectively correspond to the setting items for executing various processing, by which the navigation device 100 conducts navigation.
Examples of related words contained in the related-word information 220 are: words extracted from the names of the setting items and synonym words thereof; words concerned with targets of general target operations whereby a user conducts the setting items and synonym words thereof; and words contained in content explanations of content explaining information 310 included in a later-described setting-item database 173 and synonym words thereof. More specifically, when a setting item for displaying the map information on the screen of the display 140 in a standard reduced scale so as to conduct navigation are "standard map", examples of the related words are words extracted therefrom such as "standard" and "map", synonym words thereof such as "typical" and words indicating targets of general target operations such as "town".

The setting-item database 173 is a database for selecting related setting items (i.e., other setting items) that are related to the setting item. Specifically, as shown in Fig. 5, the setting-item database 173 has a table structure that stores plural setting-item information 300.
Specifically, the setting-item information 300 each contains: a setting-name information 210 corresponding to a conversion information 200 of the conversion database 172; content explaining information 310; operation explaining information 320; similarity information 330; and correlation information 340.

The content explaining information 310 contains a content explanation about contents of operations for inputting the setting items and a content explanation about contents of the setting items. The content explaining information 310 is structured exemplarily in a text-data format.
In other words, the content explaining information 310 contains explanations for explaining the names of the setting items in more detail.

The operation explaining information 320 contains explanations for explaining operational steps for inputting the setting items into the navigation device 100. The operation explaining information 320 is structured exemplarily in a text-data format. Specifically, the operation explaining information 320 contains explanations for explaining operational steps performed during a period from a stand-by state of the navigation device (i.e., state in which various processing is being requested to be executed after the activation of the navigation device 100) until the processing phases for inputting the corresponding setting items.
When plural operations are performed by the time when the processing phases for inputting the corresponding setting items are started, the operation explaining information 320 is structured to contain plural detailed operation-explaining information 321 each about an explanation on operational steps performed during one of the plural operations. The detailed operation-explaining information 321 is arranged in an order by which the operational steps are performed.

The similarity information 330 is for determining similarity between the setting items so as to retrieve other setting items related to the contents of the setting items contained in the setting-item information 300. The similarity information 330 includes related-keyword information 331, travel-status information 332 and device information 333.
The related-keyword information 331 is information on keywords related to the contents of the setting items. Specific examples of the related-keyword information 331 are: words extracted from explanations contained in the operation explaining information 320; synonym words of the words extracted therefrom; and words related to contents of the target operations whereby a user conducts the setting items. More specific examples are: words such as "destination" extracted from a phrase "search for location and set as the destination", which is an explanation of a setting item for "set destination"; and words such as "map" and "neighborhood" used for searching for a location, which are words related to a content of a target operation.
The travel-status information 332 is information on events in a traveling state (travel status) of the vehicle when the navigation device 100 is operated in accordance with the setting items to navigate the vehicle. Specifically, the travel-status information 332 is information on: whether or not a setting item is for "traveling", which is to be executed while the vehicle is traveling; whether or not a setting item is for "stopping", which is to be executed while the vehicle is stopped; and whether or not a setting item is for "traveling/stopping", which is to be executed both while the vehicle is traveling and while the vehicle is stopped.
The device information 333 is information on operation status of the navigation device 100 when a setting item contained in a corresponding setting-item information is inputted. Specifically, an example of an operation status of the navigation device 100 for inputting a setting item of "use highway" is "not use highway", which means that the device is in a mode not to use a highway. Alternatively, an example of an operation status of the navigation device 100 for inputting a setting item of "use standard map" is "stereoscopic map is being displayed", which means that the device is in a mode not to use a standard map.

The correlation information 340 is for determining correlation between the setting items so as to retrieve other setting items related to the content of a setting items contained in a setting-item information 300. The correlation information 340 includes similar device-operation information 341, consecutive device-operation information 342 and detailed setting-device-operation information 343.
The similar device-operation information 341 has a data structure in which one or more setting-name information 210 about other setting items whose operation processes are similar is arranged parallel to each other.
The consecutive device-operation information, which is information on contents according to which the setting items are executed parallel to each other or consecutively, includes operation group information 342A and structure group information 342B. The operation group information 342A is information on a processing system executed in the navigation device 100 for navigating (e.g., see Fig. 6), namely on group names of contents of navigation operated in accordance with the inputted setting items. The structure group information 342B is information on an operation system for inputting the setting items, namely on group names of contents of operations.
The detailed setting-device-operation information 323 is information on setting items to be inputted at a lower level by inputting the setting items, namely on detailed set contents.

The content explaining information 310 in the setting-item information 300 defines set-content information according to the aspect of the invention while the operation explaining information 320, the similarity information 330 and the correlation information 340 define operation-content information according to the aspect of the invention.

The storage 170 stores retrieval information for retrieving, for instance, information on a predetermined spot in map information.
Specifically, the retrieval information exemplarily has a tree-structured table structure in which item information is associated with each other in a hierarchy manner by various information on contents or guidance such as prefecture names, city names, district names and spot names (i.e., regions sequentially segmented in the map information) and by various information on shops (spots).
The storage 170 further stores a traffic-congestion prediction database for predicting traffic congestions.
The traffic-congestion prediction database, which contains a group of data for indicating past traffic conditions at a selected spot with reference to statistic traffic information formed by statistically processing past traffic conditions according to time elements, is used for predicting traffic congestions in conducting route searching processing (travel-route searching processing) or map-display processing. The traffic-congestion predicting database has a table structure in which date-classification IDs (identification) for indicating dates and days of the week and time-series data are stored as one record, and the traffic-congestion predicting database contains plural pairs of date-classification ID and time-series data. The time-series data is data about tendency of traffic congestions (traffic conditions). The tendency of traffic congestions is obtained by accumulating VICS data acquired from the VICS for each VICS link and by statistically processing VICS data every ten minutes according to date classification (time element) per accumulated VICS link.

The operation unit 180 exemplarily includes a CPU (central processing unit). The operation unit 180 further includes various inlet and outlet ports (not shown) such as a GPS receiving port to which the GPS receiver of the sensor 110 is connected, sensor ports to which the various sensors 112 of the sensor section 110 are respectively connected, a communication port to which the communicator 120 is connected, a key input port to which the operating section 130 is connected, a display port to which the display 140 is connected, an audio control port to which the sound generator 150 is connected, a sound-collection control port to which the sound collector 160 is connected and a storage port to which the storage 170 is connected.
The operation unit 180 exemplarily includes: an voice-input assisting processor 181 (in a form of an operation unit) serving as an voice-input assisting unit; a navigation controller 182 also serving as a navigation notification controller; and a timer 183.

The voice-input assisting processor 181 inputs, based on voice inputs, various setting items for executing various processing related to the entire navigation device 100 such as navigation processing.
The voice-input assisting processor 181 exemplarily includes: an audio-signal acquirer 181 A; a travel-status-information acquirer 181B; an operation-status-information acquirer 181C; a setting-item selector 181D; a related-item selector 181E; and notification controller 181F.

The audio-signal acquirer 181A acquires audio signals outputted from the sound collector 160 based on the voice.
The audio-signal acquirer 181 A executes processing such as frequency conversion and noise reduction on the acquired audio signals, and converts a content of the voice into text-data format. Audio information formed by converting the audio signal into text-data format is outputted to the storage 170 to be stored therein as needed. The audio information is generated as a single information every no-sound period or no-audio period. The no-sound period and the no-audio period is exemplarily set as one-second period.

The travel-status-information acquirer 181 B acquires travel-status information about the traveling state (travel status) of the vehicle, and recognizes the traveling state of the vehicle.
Specifically, the travel-status-information acquirer 181B acquires detection signals (travel-status information) outputted from the sensor section 110, and recognizes the traveling state of the vehicle (i.e., recognizes whether the vehicle is traveling or stopped).

The operation-status-information acquirer 181C acquires operation-status information about operation status of the navigation device 100, and recognizes operation status of the navigation device 100.
Specifically, the operation-status-information acquirer 181C recognizes, by recognizing control signals (operation-status information), operation status of the navigation controller 182 and operation status of the display 140, the sound generator 150 and the storage 170 which are controlled by the operation unit 180, and recognizes operation status of the navigation device 100. The operation status exemplarily includes: whether or not the vehicle is being navigated; display state of the map; and reproduction state of music data stored in the storage 170.

The setting-item selector 181 D determines which one of the setting items is being requested to be inputted by voice uttered by a user. Specifically, the setting-item selector 181D calculates probability of a setting item to match the voice based on the conversion database 172 and the audio information according to the audio signal, and retrieves setting items in a manner corresponding to the probability. The setting-item selector 181D includes a candidate-setting-item retriever 181D1 and a score-value calculator 181D2.
The candidate-setting-item retriever 181D1 compares the audio information in text-data format with the related-word information 220 contained in the conversion information 200 of the conversion database 172, and retrieves related-word information 220 that matches words contained in the audio information. Then, the candidate-setting-item retriever 181D1 recognizes setting-name information 210 of the conversion information 200 associated with the retrieved related-word information 220, and selects the recognized setting-name information 210 as candidates for setting items requested to be inputted by the user. The retrieved setting-name information 210 is outputted to the storage 170 for storage as needed.
The score-value calculator 181 D2 computes probability of the retrieved setting-name information 210 as score values. The score-value calculator 181D2 computes the score values by, for instance, calculating for each of the retrieved setting-name information 210 the number of words that match the words contained in the related-word information 220 retrieved by the setting-item selector 181 D, and computing such frequency as score values. While the score values of the probability are exemplarily computed based on the frequency of the related-word information 220, the score values may be computed by referencing both frequency of the related-word information 220 per the retrieved setting-name information 210 and occurrence frequency of words under travel status and operation status. The occurrence frequency may be obtained by comparing the travel status of the vehicle and the operation status of the navigation device 100 with the setting-item information 300 of the setting-item database 173. Alternatively, the score values may be computed by using any one of the occurrence frequency of related words, the travel status of the vehicle and the operation status or a combination thereof. Computation of the score values is not limited to the above. As long as the probability of the setting items requested to be inputted by the user can be computed based on the voice uttered by the user, any other method of computation may be employed.
Then, the score-value calculator 181D2 associates the calculated score values respectively with the retrieved setting-name information 210, and outputs the associated data to the storage 170 for storage as needed.

The related-item selector 181E, based on the conversion database 173, retrieves setting-item information 300 that corresponds to the setting-name information 210 of the setting items retrieved by the setting-item selector 181D, and retrieves other related setting items based on the retrieved setting-item information 300. Specifically, the related-item selector 181E retrieves the setting-item information 300 that corresponds to the setting-name information 210 of the setting items retrieved by the setting-item selector 181D, compares the retrieved setting-item information 300 with other setting-item information 300, and searches for other setting-item information 300 to which the operation explaining information 320, the similarity information 330 and the correlation information 340 are related. The related-item selector 181E exemplarily includes a similarity determiner 181E1 and a correlation determiner 181 E2.
The similarity determiner 181E1 determines similarity of operations between the retrieved setting item information 300 and other setting item information 300 in the setting-item database 173. In determining the similarity of operations, the similarity determiner 181E1 determines: a relevance degree (a) about commonality (relevance) of keywords of the setting items in the setting-item information 300; and a relevance degree (b) about coincidence between the setting-item information 300 and information on prerequisite (i.e., coincidence between the traveling state of the vehicle and the operation status of the navigation device 100).
Specifically, as exemplarily shown in Figs. 7 to 10, with respect to the relevance degree (a), related-keyword information 331 that contains words common to related-keyword information 331 of the similarity information 330 of the retrieved setting-item information 300 is retrieved. Then, commonality thereof is computed as a score value of the relevance degree (a) based on the number of the common words. Other setting-item information 300 containing the retrieved related-keyword information 331 is retrieved in a manner associated with the computed score value of the relevance degree (a). With respect to the relevance degree (b), coincidence in terms of words between the traveling state of the vehicle acquired and recognized by the travel-status-information acquirer 181 B, the operation status of the navigation device 100 acquired and recognized by the operation-status-information acquirer 181C and the travel-status information 332 and the device information 333 of the similarity information 330 of the setting-item information 330 is calculated as a score value (coincidence of prerequisite) exemplarily based on the number of the identical words. Then, based on approximation of score values of coincidence between the retrieved setting-item information 300 and other setting-item information 300, supremacy of the relevance degree (b) is calculated as a score value. Other setting-item information 300 is associated with the score value of the relevance degree (b) and retrieved.
The correlation determiner 181E2 determines correlation between the retrieved setting-item information 300 and other setting-item information 300 in the setting-item database 173. In determining the correlation, the correlation determiner 181 E2 determines: a correlation (A) related to similarity (relevance) of operation processes of the setting-item information 300; a correlation (B) related to relationship (relevance) on which the setting items are executed parallel to each other or consecutively; and a correlation (C) related to relationship (relevance) of setting items inputted at a lower level by the inputting of the setting items.
Specifically, as exemplarily shown in Figs. 7 to 10, with respect to the correlation (A), other setting-item information 300 containing words that are common to the similar device-operation information 341 of the retrieved setting-item information 300 is retrieved. With respect to the correlation (B), other setting-item information 300 containing the same consecutive device-operation information 342 as that of the retrieved setting-item information 300 is retrieved. With respect to the correlation (C), other setting-item information 300 containing the setting-name information 210 that contains words common to the detailed setting-device-operation information 343 of the retrieved setting-item information 300 is retrieved.

The related-item selector 181 E, based on the score values of the relevance degrees (a) and (b) of the other setting-item information 300 calculated by the similarity determiner 181E1 and the other setting-item information 300 retrieved by the correlation determiner 181E2, selects the other setting-item information 300 related to the retrieved setting-item information 300.
Specifically, the related-item selector 181E selects such other setting-item information that exhibits higher score value of the relevance degrees (a) and (b) and higher coincidence of the correlations (A), (B) and (C) by a predetermined threshold number, and associates the retrieved setting-item information 300 with the related other setting-item information 300. The setting-item information 300 may be associated together exemplarily by appending common flag information. Then, a combination of the retrieved setting-item information 300 and the other setting-item information 300 having been associated together is outputted to the storage 170 for storage as needed.
For instance, as shown in Fig. 7, a setting item of "set destination" is associated with: a setting item of "view neighborhood information", which is relevant thereto in terms of the relevance degrees (a) and (b) and the correlation (B); a setting item of "view destination information", which is relevant thereto in terms of the relevance degree (a); a setting item of "view map of destination", which is relevant thereto in terms of the relevance degree (a) and the correlation (B); and a setting item of "view information on traffic congestion", which is relevant thereto in terms of the relevance degrees (a) and (b). Alternatively, as shown in Fig. 8, a setting item of "use highway" is associated with: a setting item of "change route", which is relevant thereto in terms of the relevance degree (a) and the correlation (B); a setting item of "set fares", which is relevant thereto in terms of the relevance degree (a) and the correlation (B); and a setting item of "view information on traffic congestion", which is relevant thereto in terms of the relevance degrees (a) and (b) and the correlations (A) and (B). Further alternatively, as shown in Fig. 9, a setting item of "use standard map" is associated with: a setting item of "change direction of map", which is relevant thereto in terms of the relevance degree (a) and the correlations (A), (B) and (C); a setting item of "change scale", which is relevant thereto in terms of the relevance degree (a) and the correlation (B); and a setting item of "return to original", which is relevant thereto in terms of the relevance degree (a). Still further alternatively, as shown in Fig. 10, a setting item of "listen to favorite music" is associated with: a setting item of "turn up volume", which is relevant thereto in terms of the relevance degree (a) and the correlation (B); a setting item of "play in manner of live-music club", which is relevant thereto in terms of the relevance degree (a) and the correlation (B); and a setting item of "randomly reproduce", which is relevant thereto in terms of the correlation (B).

The notification controller 181 F notifies a user of the combination of the setting-item information 300 containing setting items retrieved by the setting-item selector 181D and the other setting-item information 300 retrieved and associated therewith by the related-item selector 181 E, and requests the user to confirm the input setting. The notification controller 181F includes a display controller 181F1 and a sound controller 181F2.
The display controller 181F1 controls the display 140 to display various image data on its screen as needed.
Specifically, as exemplarily shown in Fig. 11, the display controller 181F1 controls the display 140 to display, based on a format stored in the storage 170 in advance, a combination of the setting-name information 210 of the setting-item information 300 and the other setting-item information having been associated together At the time when the combination is displayed, the display controller 181F1 controls the display 140 to display combinations of the setting-item information 300 of which probability to matches the voices is determined high based on the score values computed by the setting-item selector 181D and the setting-name information 200 of the other setting-item information 300 related to the above setting-item information 300 by the predetermined threshold number.
The display controller 181F1 also superposes icons on the map information (icons for indicating the current position and the destination, traveling routes and icons related to traffic congestions), and controls the display 140 to display the map information superposed with the icons. The display controller 181F1 also controls various display screens for requesting a user to conduct input operations via, for instance, the operating section 130 or voice to input the setting items. The display controller 181F1 also controls display of image data such as images and video stored in the storage 170. The sound controller 181 F2 controls the sound generator 150 to output various audio data as audio therethrough as needed. The audio data controlled by the sound controller 181 F2 includes: audio guidance for navigation; audio guidance for requesting the user to input or confirm the setting items; and various other audio data such as music and audio stored in the storage 170.

The navigation controller 182 controls the navigation device 100 to execute the navigation processing.
The navigation controller 182 exemplarily includes a current-position recognizer 182A, a destination recognizer 182B, a condition recognizer 182C, a navigation notifier 182D and a route processor 182E. While the navigation controller 182 exemplarily shares the notification controller 181F with the voice-input assisting processor 181 in this exemplary embodiment, the arrangement is not limited thereto.

The current-position recognizer 182A recognizes the current position (departure point) of the vehicle. Specifically, the current-position recognizer 182A calculates plural pseudo current positions of the vehicle based on speed data and azimuth data respectively outputted by the speed sensor and the azimuth sensor of the sensor section 110. The current-position recognizer 182A also recognizes a pseudo coordinate value at which the vehicle is currently located based on GPS data about the current position outputted by the GPS receiver. Then, the current-position recognizer 182 A compares the computed pseudo current positions with the recognized pseudo coordinate value of the current location of the vehicle, calculates the current position of the vehicle on the map information separately acquired, recognizes the current position that serves as the departure point, and acquires current-position information (departure-point information) about the current position.
In addition, based on acceleration data outputted by the acceleration sensor, the current-position recognizer 182A determines sloping and height difference of a road on which the vehicle travels, calculates a pseudo current position of the vehicle, and recognizes the current position. In other words, even when the vehicle is located at a point where roads are overlapped in plan view (e.g., cubic interchange, highway), the current position of the vehicle can be accurately recognized. When the vehicle travels on a mountain road or a slope road, the current-position recognizer 182A accurately recognizes the current position of the vehicle by, for instance, correcting an error between a travel distance derived solely from the speed data and the azimuth data and an actual travel distance of the vehicle with reference to the detected sloping of the road.
The current-position recognizer 182A recognizes as pseudo current positions not only the above-described current position of the vehicle but also positions such as departure points that serve as start points set by setting items specified by the input operations of the operating section 130 or voice inputs. Various information obtained by the current-position recognizer 182A is stored in the storage 170 as needed.

The destination recognizer 182B obtains destination information on a destination (destination point) set through, for instance, the operating section 130 or voice inputs, and recognizes a position of the destination.
The destination information set as described above may be any one of various information such as a coordinate defined by latitude and longitude, address and telephone number, as long as the information can specify a location of the destination. The destination information obtained by the destination recognizer 182B is stored in the storage 170 as needed.

The condition recognizer 182C acquires information on various setting items for executing various processing of the entire navigation device 100 in which setting items specified through the input operations of the operating section 130 or voice inputs are set.
The information on the various setting items, which may serve as set conditions, is stored in the storage 170 as needed.

The navigation notifier 182D generates navigation information about navigation of traveling of the vehicle (e.g., navigation for assisting the traveling of the vehicle) based on travel-route information and local navigation information. The travel-route information and the local navigation information, which are stored in the storage 170, are obtained in advance in accordance with the map information and the traveling state of the vehicle. The navigation notifier outputs the generated navigation information to the notification controller 181F, so that the generated navigation information is controlled to be notified to the user through screen display by the display 140 or audio outputs by the sound generator 150.
The navigation information may be notified to the user by, for instance, displaying predetermined arrow marks or symbols on the display screen of the display 140, or by audio-outputting through the sound generator 150 an audio guidance such as "Turn right at the XX intersection 700m ahead, and go in a direction of YY", "You have deviated from the travel route" or "Traffic congestion is expected along the way".

The route processor 182E computes a travel route on which the vehicle travels and searches for routes based on setting items set by a user to designate routes and the map information stored in the storage 170. Based on the setting items set through the input operations by the user, the route processor 182E searches for travel routes (i.e., computes travel routes) in accordance with various route-searching requests on, for instance, whether or not the VICS data (traffic information about traffic restrictions, traffic congestions and congestions predict) should be referenced, the shortest distance and the shortest time.
With respect to the setting items for designating travel routes, exemplarily based on operation signals corresponding to input operations related to setting requests for travel routes, the display controller 181F1 controls the display 140 to display a screen for requesting the user to input setting items (various conditions), or the sound controller 181F2 controls the sound generator 150 to output an audio guidance. Then, the setting items for designating travel routes are acquired through input operations or voice inputs conducted by the user in accordance with the screen display or the audio output. The set travel routes are outputted to the storage 170 for storage as needed.
In searching for a travel route exemplarily when setting items for requesting congestion predict are not set, the route processor 182E acquires the current-position information, the destination information, the information on the setting items and current-congestion information. Then, based on the acquired information, the route processor 182E searches for roads travelable for vehicles by use of travel-route-searching map information of the map information, and generates travel-route information with a setting of, for instance, a route of the shortest travel time, a route of the shortest travel distance or a route that avoids traffic congestions and traffic-restricted spots. The route processor 182E computes a travel time and travel distance until the destination for each route of the travel-route information, and generates travel-time information about the travel time of the routes and travel-distance information about the travel distances of the routes.
On the other hand, in searching for a travel route when setting items for requesting congestion predict are set, the route processor 182E acquires the current-position information, the destination information, the information on the setting items and the current-congestion information. Then, based on the acquired information, the route processor 182E generates candidate-travel-route information with a setting of, for instance, a route of the shortest travel time, a route of the shortest travel distance or a route that avoids traffic congestions and traffic-restricted spots. The route processor 182E acquires the current-congestion information and congestion predict information, narrows the candidate routes of the candidate-travel-route information with reference to the acquired information, and generates travel-route information with a setting of, for instance, a route. The route processor 182E computes a travel time and travel distance until the destination for each route of the travel-route information, and generates travel-time information about the travel time of the routes and travel-distance information about the travel distances of the routes.
When the travel routes are searched, not only the travel-route-searching map but also the matching data MM of the map information may be used. For instance, the matching data MM is used when a travel route that uses a narrow road such as back roads (i.e., roads not covered in the travel-route-searching map) is to be searched. When the matching data MM is used, routes are searched as needed based on determination of road conditions. The travel-route information also exemplarily contains route-navigation information for navigating and assisting a traveling of the vehicle. The route-navigation information is displayed on the display 140 or audio-outputted by the sound generator 150 as needed so as to assist the traveling.
Further, the route processor 182E references the congestion predict information, and computes every predetermined time (e.g., every 30 minutes) an expected arrival position of the vehicle that travels along the travel route by use of, for instance, the information from the sensor section 110 and the map information. Specifically, the route processor 182E computes a travel distance by which the vehicle travels during the predetermined time based on information about legal speed contained in the map information, and recognizes an expected arrival position of the vehicle based on the computed travel distance by use of the matching data MM of the map information. Expected-position information about the expected arrival position is stored in the storage 170 as needed.

The timer 183 recognizes the current clock time based on a reference pulse such as an built-in clock.
Then, the timer 183 outputs time information about the recognized current clock time as needed.

### Operation(s) of Navigation Device

Now, as one of operations of the above navigation device 100, a processing operation for selecting the setting items corresponding to the voice inputs will be described with reference to the attached drawings.

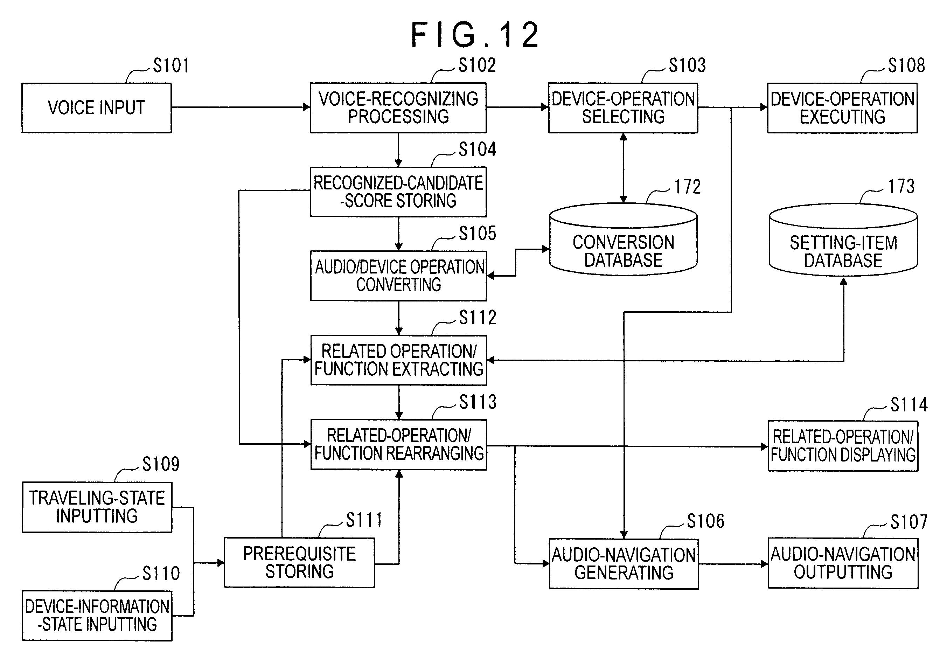

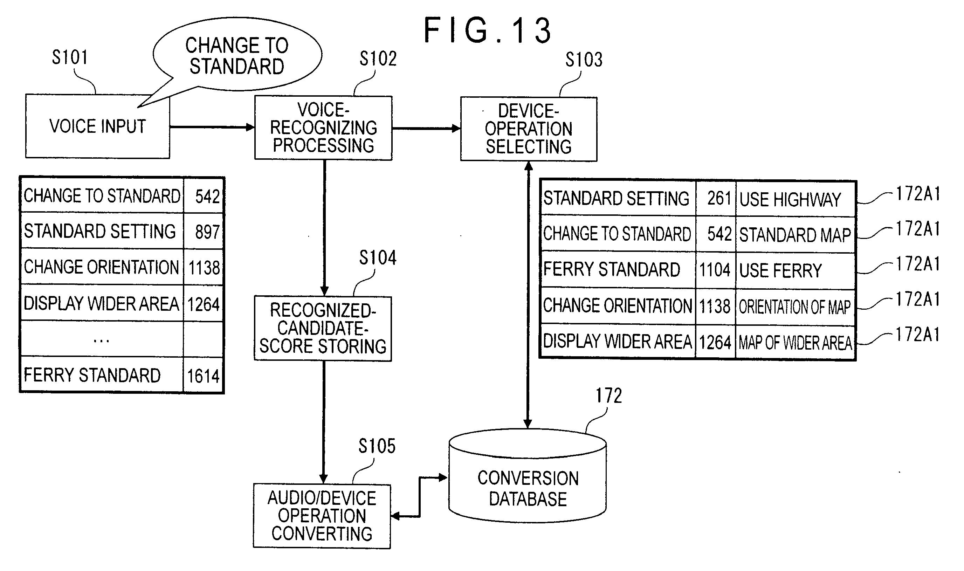

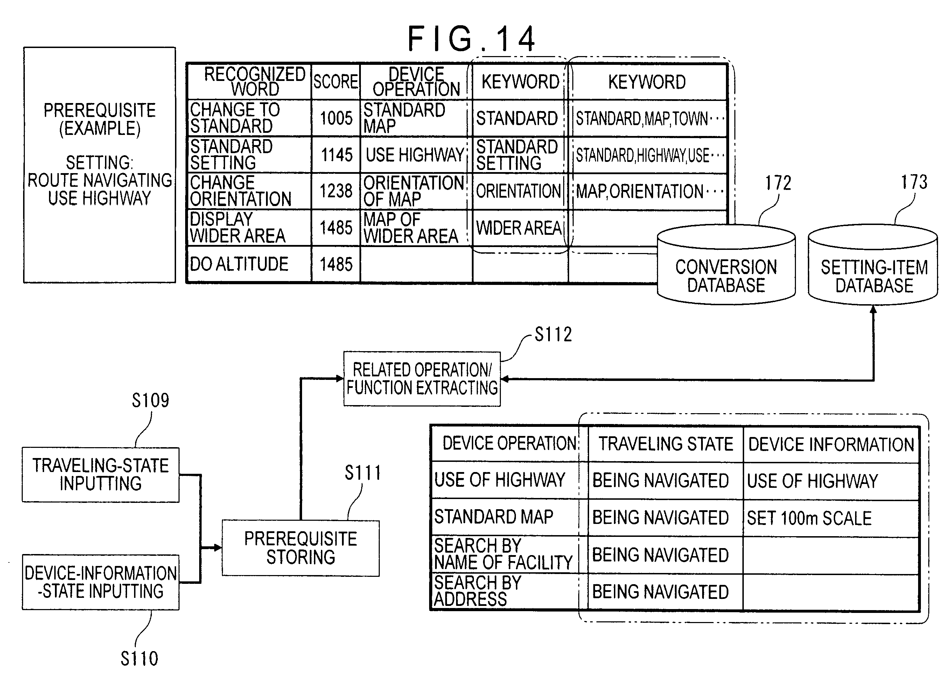

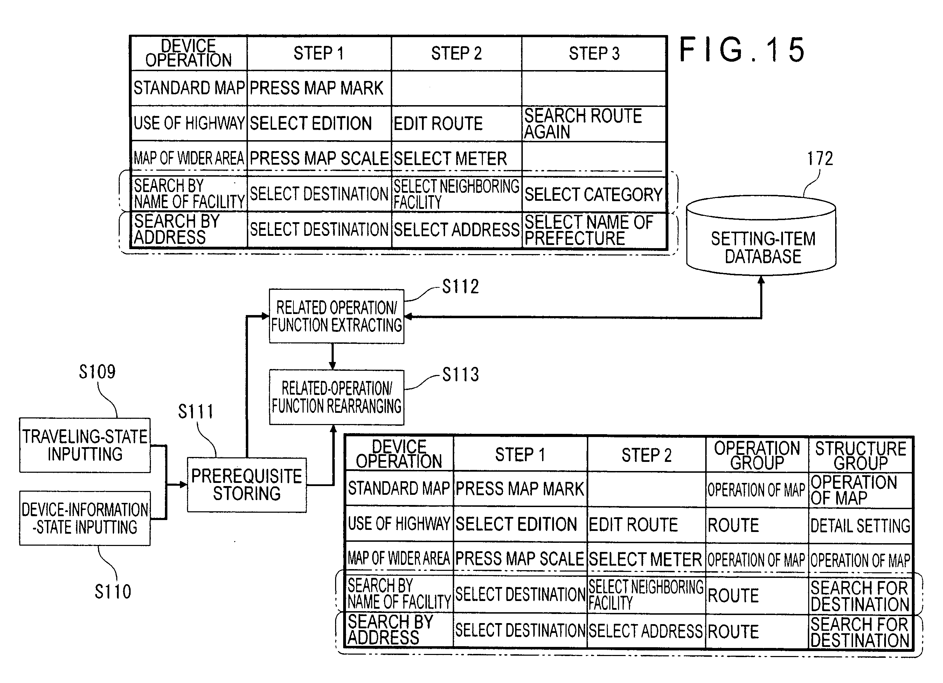

Fig. 12 is a flow chart showing the entire processing operation required for setting the setting items through voice inputs. Fig. 13 is a flow chart showing a processing operation for selecting the setting items based on the voice inputs. Fig. 14 is a flow chart showing a processing operation for determining similarity when other setting items related to the setting items are selected. Fig. 15 is a flow chart showing a processing operation for determining correlation when other setting items related to the setting items are selected.

When a passenger (user) having gotten in a vehicle switches on the navigation device 100 and the navigation device 100 is fed with power, the operation unit 180 executes default setting, controls by use of the notification controller 181F the display 140 to display a main menu on its screen, and controls the sound generator 150 to audio-output an audio guidance for requesting the user to select setting items from the main menu and to input the selected setting items. In other words, the operation unit 180 controls the display 140 and the sound generator 150 so as to request the user to input the setting items for operating the navigation device 100 through the screen and the audio guidance.
Where necessary, the navigation device 100 may control the operation unit 180 to execute a processing for acquiring the map information and VICS data via network at the time, for instance, when the default setting is executed.

The operation unit 180 subsequently recognizes the operation signal and the audio signal respectively corresponding to the input operations on the main menu and the voice inputs for requesting a setting of travel routes. Then, as in the main menu, the notification controller 181F outputs a screen and an audio guidance for requesting the user to input various information required for searching travel routes and various setting-item information such as the destination information, information about which of the shortest-travel-distance route or the shortest-travel-time route is preferred and information about whether or not congestions should be predicted.
As exemplarily shown in Figs. 12 and 13, when the voice inputs are conducted (i.e., voice signal is inputted), the sound collector 160 collects the voice uttered by the user. Then, the sound collector 160 generates audio signal about the voice (step S101) and outputs the generated signal to the operation unit 180. The audio-signal acquirer 181 A acquires the outputted audio signal, executes a processing such as frequency conversion and noise reduction on the acquired audio signal, and converts a content of the voice into text-data format (voice-recognizing processing of step S 102).

By use of the candidate-setting-item retriever 181D1, the operation unit 180 compares the audio information in text-data format with the related-word information 220 contained in the conversion information 200 of the conversion database 172, and retrieves related-word information 220 about words that match words contained in the audio information (device-operation selection processing of step S103). Then, the candidate-setting-item retriever 181D1 recognizes setting-name information 210 of the conversion information 200 associated with the retrieved related-word information 220, and selects the recognized setting-name information 210 as candidates for setting items requested to be inputted by the user.
By use of the score-value calculator 181 D2, the operation unit 180 computes the score values for each of the detected setting-name information 210 by computing, for instance, the number of words that match the words contained in the related-word information 220 retrieved by the setting-item selector 181 D, and computing such frequency as score values. Then, the calculated score values are respectively associated with the detected setting-name information 210, and the associated data is outputted to the storage 170 for storage as needed (recognized-candidate-score storing processing of step S 104).

In the manner described above, the operation unit 180 recognizes setting items (setting-name information 200) that exhibits higher probability of matching the voices exemplarily with reference to largeness of the score values (audio/device operation conversion processing of step S105).
Then, by use of the notification controller 181F, the operation unit 180 controls the display 140 to display a screen with a format stored in advance for requesting the user to confirm whether the setting items represented by the setting-name information 210 recognized during the step S105 should be inputted therein. The operation unit 180 also controls an audio guidance for requesting the same to be generated (audio-navigation generation processing of step S106). Subsequently, the sound generator 150 is controlled to audio-output the audio guidance (audio-navigation output processing of step S107) and notify the user of the request for confirmation on the setting input. At the time when the audio guidance is notified, a list of plural setting-name information 210 may be displayed on the screen based on the largeness of the score values, and the operation unit 180 may request the user to confirm which of the setting items should be inputted.
When recognizing a request for setting input through the input operations on the operating section 130 or the voice inputs as a consequence of such notification, the operation unit 180 inputs the setting items therein based on the setting-name information 210 (device-operation execution processing of step S108), and operates the navigation device 100 in accordance with the setting items.
When the operation unit 180 recognizes that no setting input is requested by the user or that a request for selecting other setting items is made by the user, the operation unit 180 restart the operation from the step S 102 to select the setting-name information 210.

After the setting input is processed, as exemplarily shown in Figs. 12, 14 and 15, the operation unit 180 controls the travel-status-information acquirer 181 B to acquire the detection signals outputted by the sensor section 110 (traveling-state input processing of step S109), controls the operation-status-information acquirer 181C to recognize control signals of the navigation device 100 being controlled by the operation unit 180 (device-information-state input processing of step S 110), and recognizes the traveling state and the operation state (prerequisite storage processing of step S111).
The operation unit 180 further controls the related-item selector 181E to select other setting items related to the setting items represented by the setting-name information 210 that is retrieved by the setting-item selector 181D and inputted during the step S108 (related operation/device extraction processing of step S 112).
Specifically, as exemplarily shown in Figs. 12 and 14, the related-item selector 181E retrieves the setting-item information 300 corresponding to the setting-name information 210 retrieved by the setting-item selector 181 D from the setting-item database 173. Then, by use of the similarity determiner 181E1, the operation unit 180 calculates the commonality between the retrieved setting-item information 300 and the related-keyword information 331 as the score value based on the number of words that are common between the retrieved setting-item information 300 and the related-keyword information 331 of the similarity information 330, and recognizes the calculated commonality as the relevance degree (a) of the retrieved setting-item information 300 to the other setting-item information 300. By use of the similarity determiner 181E1, the operation unit 180 also calculates, based on the traveling state recognized during the step S108, coincidence of prerequisite between the travel-status information 332 and the device information 333 of the retrieved setting-item information 300 as the score value based on, for instance, the number of words that are common to both the information 332 and 333. Then, the operation unit 180 recognizes the calculated coincidence as the relevance degree (b) of the retrieved setting-item information 300 to the other setting-item information 300.
Specifically, as exemplarily shown in Figs. 12 and 15, by use of the correlation determiner 181E2, the related-item selector 181 E retrieves other setting-item information 300 containing words that are common to the similar device-operation information 341 of the retrieved setting-item information 300. Such other setting-item information 300 is retrieved as the correlation (A). By use of the correlation determiner 181E2, the related-item selector 181E also retrieves other setting-item information 300 containing the same consecutive device-operation information 342 as that of the retrieved setting-item information 300. Such other setting-item information 300 is retrieved as the correlation (B). By use of the correlation determiner 181E2, the related-item selector 181E also retrieves other setting-item information 300 containing the setting-name information 210 that contains words common to the detailed setting-device-operation information 343 of the retrieved setting-item information 300. Such other setting-item information 300 is retrieved as the correlation (C).
Then, the related-item selector 181E, based on the score values of the relevance degrees (a) and (b) of the other setting-item information 300 calculated by the similarity determiner 181E1 and the other setting-item information 300 retrieved by the correlation determiner 181E2, selects the other setting-item information 300 related to the retrieved setting-item information 300. At the time of selecting the related setting-item information, the related-item selector 181E exemplarily selects such setting-item information 300 that exhibits high score values of the relevance degrees (a) and (b) and high coincidence of the correlations (A), (B) and (C) (related-operation/function rearrangement processing of step S113).

Subsequently, as exemplarily shown in Fig. 11, the operation unit 180 controls the notification controller 181F, so that the setting-name information 210 of the input setting items is displayed in the screen of the display 140 in a format stored in advance in the storage 170 and in a manner associated with the names of the setting items contained in the setting-name information 210 having been associated therewith during the step S113 (related-operation/function display processing of step S114). At the time of screen display during the step S 114, a list of the other setting-name information 210 that is retrieved during the step S104 but not inputted during the step S 108 is also displayed as the candidates in a manner associated with the other setting-name information 210 having been associated therewith during the step S113. Then, the screen display displays a request for the user to confirm which of the setting items should be inputted.
As in the step S106, the operation unit 180 generates an audio guidance for requesting the user to confirm whether or not the names of the setting items contained in the related other setting-name information 210 should be inputted through the input operations and the voice inputs. Then, as in the step S 107, the operation unit 180 requests the user to confirm the next setting items to be inputted.
In the manner described above, the setting items corresponding to the voice are sequentially selected and inputted, so that the navigation device 100 is operated in accordance with the inputted setting items.

### Effect(s) and Advantage(s) of Navigation Device

As described above, according to the above exemplary embodiment, when the setting items for navigating the vehicle are inputted by voice inputs into the navigation device 100 for navigating the traveling of the vehicle from the current position to the destination based on the map information, the conversion database 172 and the setting-item database 173 are used. The conversion database 172 has the table structure storing the plural conversion information 200 that is each structured as single data formed by associating the setting-name information 210 about the name of the setting items with the plural related-item information 220 containing the words related to the setting items represented by the setting-name information 210. The setting-item database 173 has the table structure storing the plural setting-item information 300 that is each structured as single data formed by associating together the setting-name information 210, the content explaining information 310 (set-content information) about the contents of the setting items represented by the information 210, the operation explaining information 320, the similarity information 330 and the correlation information 340 (for forming operation content information about the operation contents for executing the setting items represented by the information 210).
When the audio-signal acquirer 181A acquires the audio signals corresponding to the voice of the user (i.e., acquires the audio signals outputted in a manner corresponding to the voice collected by the sound collector 160), the setting-item selector 181D computes the probability at which the setting-name information 210 of the setting items match the voices based on the conversion database 172 and the audio signals, and retrieves the setting-name information 210 in accordance with the computed probability. The related-item selector 181E, based on the setting-item database 173, retrieves the setting-item information 300 that corresponds to the setting-name information 210 of the setting items retrieved by the setting-item selector 181D, and retrieves related other setting items based on the content explaining information 310 of the retrieved setting-item information 300 and based on the operation explaining information 320, the similarity information 330 and the correlation information 340 for forming the operation content information. Then, the notification controller 181F associates the setting-name information 210 of the setting items selected by the setting-item selector 181D with the setting-name information 210 of the related other setting items retrieved by the related-item selector 181E. Subsequently, the notification controller 181F controls the display 140 to display a request for the user to confirm the setting items to be inputted on the screen, and controls the sound generator 150 to audio-output the same request.
Accordingly, with a simple data structure structured by the conversion information 200 formed by associating the names of the setting items with the words related to the contents of the setting items and the setting-item information 300 formed by associating the names of the setting items with the setting items and the operation contents for executing the contents of the setting items, the setting items that the user intends to input through voice inputs can be selected. In addition, by arranging the navigation device 100 to notify the user of other setting items related to the items inputted therein by the input operations, the user can obtain a guidance on the next setting items and can easily predict the device operations. Since the setting items are sequentially selected and inputted, usability of the voice inputs can be enhanced with a simple arrangement.

The conversion database 172 contains the conversion information 200 structured to contain words used in the names of the setting-item information 210 and the synonym words thereof. The synonym words are contained therein as the related-word information 220 about words related to the setting items.
Since the conversion information 200 contains the names of the setting items to be set, the words contained in the names and the synonym words thereof (i.e., the related words), it is possible to easily structure a database for computing probability of the setting items to match the voices in order to select the setting items that the user intends to input through the voice inputs. Thus, the navigation device 100 usably operatable by voice inputs can be easily provided.

The setting-item selector 181D, based on the conversion information 200 of the conversion database 172, recognizes related words that are identical to the words contained in the audio signals, and calculates the occurrence frequency of the related words. The setting-item selector 181D also calculates the probability of the setting items to match the voices by calculating the total value of the setting-name information 210 associated with the related words as the score value.
With this arrangement, the probability for measuring a matching degree of the setting items with the voice request of the user can be easily calculated by a simple calculating method, and the setting items corresponding to the voices can be rapidly selected, thereby further enhancing the usability. In addition, since the plural setting items are notified in accordance with the largeness of the score values calculated as the probability, the user can easily recognize the desirable setting items. Thus, the setting inputs free from errors can be further facilitated, thereby further enhancing the usability.

The setting-item database 173 contains the setting-item information 300 formed by associating the travel-status information 332 about the events of the traveling state of the vehicle during the navigation by the navigation device 100 operated in accordance with the setting items and the device information 333 about the operation state of the navigation device in the setting-name information 210 with the setting-name information 210.
With this arrangement, while the operation state of the navigation device 100 in accordance with the traveling state of the vehicle and the operation state of the navigation device 100 operated in accordance with the setting items of the inputted setting-name information 210 is being additionally referenced, the setting items can be selected without erroneously selecting related other setting items. Thus, an arrangement into which a user can usably input the settings properly through voice inputs can be realized.

The related-item selector 181E, based on the setting-item database 173, retrieves the operation explaining information 320 for forming operation-content information of the setting-item information 300 corresponding to the setting-name information 210 of the setting items retrieved by the setting-item selector 181D, the operation explaining information 320 related to the similarity information 330 and the correlation information 340, the similarity information 330 and the correlation information 340. Then, the related-item selector 181 E retrieves the setting-name information 210 of the setting-item information 300 with which the retrieved operation explaining information 320, similarity information 330 and correlation information 340 are associated. In other words, the related-item selector 181 E retrieves the related other setting items.
With this arrangement, the other setting items related to the setting items retrieved by the setting-item selector 181D (i.e., the setting items to be inputted next) can be more properly retrieved based on the contents of the setting items and the contents of the input operations, and the to-be-inputted items can be sequentially notified to the user. Thus, an arrangement into which a user can usably input the settings properly through voice inputs can be realized.

The related-item selector 181 E further retrieves the operation explaining information 320 for forming operation-content information of the setting-item information 300 of the setting items retrieved by the setting-item selector 181D, the operation explaining information 320 containing words common to the similarity information 330 and the correlation information 340, the similarity information 330 and the correlation information 340.
With this arrangement, the related other setting items can be easily retrieved by searching the common words. In other words, the setting items to be inputted next can be easily retrieved. Thus, the other setting items can be rapidly retrieved with a simple arrangement, thereby easily enhancing usability of the navigation device 100 operatable in accordance with the voice inputs.

The setting-item database 173 contains the setting-item information 300 formed by associating the travel-status information 332 about the events of the traveling state of the vehicle during the navigation by the navigation device 100 operated in accordance with the setting items and the device information 333 about the operation state of the navigation device in the setting-name information 210 with the setting-name information 210. The related-item selector 181E retrieves the travel-status information 332 and the device information 333 that contain words common to the travel-status information 332 and the device information 333 of the setting-item information 300 corresponding to the setting-name information 200 of the setting items retrieved by the setting-item selector 181D. Then, the related-item selector 181E retrieves the setting-name information 210 with which at least either of the travel-status information 332 and the device information 333 is associated. The related-item selector 181 Ee retrieves the setting-name information 210 as the related other setting items.
With this arrangement, while the operation state of the navigation device 100 in accordance with the traveling state of the vehicle and the operation state of the navigation device 100 operated in accordance with the setting items of the inputted setting-name information 210 is being additionally referenced, the other setting items that are related to the setting items retrieved by the setting-item selector 181D can be easily retrieved by searching the common words. In addition, without erroneously retrieving the setting items, the navigation device 100 can rapidly retrieve suitable related setting items with a simple database structure. Thus, an arrangement of the navigation device 100 can be simplified and usability of the navigation device 100 can be enhanced.

Further, the related-item selector 181E retrieves the other setting items that are related to the setting items having been retrieved by the setting-item selector 181D, notified to the user by the notification controller 181 F and inputted by the user through the input operations.
Accordingly, computation required for retrieving the setting items related to the inputted setting items that reflect the user's requests can be made minimum, thereby realizing a more rapid and suitable retrieval of the other setting items. Specifically, since the operation state of the navigation device 100 operated in accordance with the inputted setting items in accordance with the traveling state of the vehicle and the operation state of the navigation device 100 are directly reflected, the other setting items can be more suitably retrieved.

The combination of the setting items and the related other setting items is reported to the user in accordance with the largeness of the probability.
Thus, the next setting items can be easily inputted through voice inputs, thereby enhancing usability.

The voice-input assisting processor 181 is provided in the CPU in a form of a program and set to execute the above-described processing.
With this arrangement, by installing the program or by using a recording medium containing the program, the above-described processing can be easily realized, thereby contributing to use expansion.

### Modification(s) of Embodiment

The invention is not limited to the above-described exemplary embodiment(s) but may include such modification(s) as follows as long as an object of the invention can be achieved.

As described above, the movable body is not limited to automobiles but may be any one of various vehicles that travel on a road such as two-wheel vehicles (e.g., motorcycle) and trucks. In addition, the movable body may be a vehicle that travels on a track, an aircraft, a vessel or a user who carries the navigation device.
The navigation device 100 may not be an in-vehicle device, but may be any one of various devices. For instance, the navigation device 100 may be a device that a user can directly carry such as a mobile phone and a PHS.
The navigation device 100 may not be configured as a single device, but may be configured as a system. For instance, the navigation device 100 may be configured as such a system that: acquires map information from a server via network; searches for travel routes of the vehicle by use of the server; receives search results via the network by a terminal provided in the vehicle; and determines a travel route by the terminal.
The navigation device 100 may not be in-vehicle device. For instance, the navigation device 100 may be configured as so-called a simulation software, and used in a personal computer for conducting a simulation search of travel routes and alternative travel routes between a virtual departure point and a virtual destination.
The map information is not limited to the information having the above-described table structure, but may be information having any other table structure.

The setting-item selector 181 D may not be arranged to select setting items based on the conversion database 172, but may be arranged to select setting items by use of the setting-item database 173. Alternatively, the conversion database 172 may be configured to contain such information about words related to the setting items as contained in the setting-item database 173 (e.g., set-content information, operation-content information), so that the setting-item selector 181D may use the conversion database 172 to select setting items by referencing not only the words related to the names but also the traveling state and the operation state of the navigation device 100. With this arrangement, the setting items of higher probability can be selected.
When the setting-item selector 181 D is configured to additionally reference to the traveling state and the operation state, the setting-item selector 181D may exemplarily compute the coincidence of operating states and the operation states as the score value like the related-item selector, and reference the computed score value as the probability.

While the selected setting items are not limited to setting items for navigation operations but may be setting items for processing music information and video information installed as functions of the navigation device 100, the setting items for processing such music information and the video information may not be selected.
According to the aspect of the invention, processing of the music information and the like installed in the navigation device 100 is also performed as one of the operations for assisting the navigation, so that an in-vehicle environment comfortable for a driver and passenger(s) can be provided by outputting of sound and video while the vehicle is being traveling. Thus, the setting items for processing such music information and the like are also selected.

While the above-described functions are configured as programs, the functions may be configured in any other manner. For instance, the functions may be configured as hardware such as a circuit board or a device such as a single IC (integrated circuit). By configuring the functions as programs or by configuring the functions to be separately read from a recording medium, handleability thereof can be facilitated and use thereof can be easily expanded.
The operation unit may not be configured as a single computer, but may be provided by combining plural computers in a network manner. Alternatively, the operation unit may be configured as a device such as CPU and a microcomputer or as a circuit board mounted with plural electronic components.

It should be additionally understood that a specific arrangement and process for implementing the invention may be modified to another arrangement and the like as needed within a scope where an object of the invention can be achieved.

### Effect(s) of Embodiment

As described above, according to the above exemplary embodiment, when the setting items for navigating the vehicle are inputted by voice inputs into the navigation device 100 for navigating the traveling of the vehicle from the current position to the destination based on the map information, the conversion database 172 and the setting-item database 173 are used. The conversion database 172 has the table structure storing the plural conversion information 200 that is each structured as single data formed by associating the setting-name information 210 about the name of the setting items with the plural related-item information 220 containing the words related to the setting items represented by the setting-name information 210. The setting-item database 173 has the table structure storing the plural setting-item information 300 that is each structured as single data formed by associating together the setting-name information 210, the content explaining information 310 (set-content information) about the contents of the setting items represented by the information 210, the operation explaining information 320, the similarity information 330 and the correlation information 340 (for forming operation content information about the operation contents for executing the setting items represented by the information 210).
When the audio-signal acquirer 181 A acquires the audio signals outputted in a manner corresponding to the voice collected by the sound collector 160, the setting-item selector 181D computes the probability at which the setting-name information 210 of the setting items matches the voices based on the conversion database 172 and the audio signals, and retrieves the setting-name information 210 in accordance with the computed probability. The related-item selector 181 E, based on the setting-item database 173, retrieves the setting-item information 300 that corresponds to the setting-name information 210 of the setting items retrieved by the setting-item selector 181D, and retrieves related other setting items based on the content explaining information 310 of the retrieved setting-item information 300 and based on the operation explaining information 320, the similarity information 330 and the correlation information 340 for forming the operation content information. Then, the notification controller 181F associates the setting-name information 210 of the setting items selected by the setting-item selector 181D with the setting-name information 210 of the related other setting items retrieved by the related-item selector 181E. Subsequently, the notification controller 181F controls the display 140 to display a request for the user to confirm the setting items to be inputted on the screen, and controls the sound generator 150 to audio-output the same request.
Accordingly, with a simple data structure structured by the conversion information 200 formed by associating the names of the setting items with the words related to the contents of the setting items and the setting-item information 300 formed by associating the names of the setting items with the setting items and the operation contents for executing the contents of the setting items, the setting items that the user intends to input through voice inputs can be selected. In addition, by arranging the navigation device 100 to notify the user of other setting items related to the items inputted therein by the input operations, the user can obtain a guidance on the next setting items and can easily predict the device operations. Since the setting items are sequentially selected and inputted, usability of the voice inputs can be enhanced with a simple arrangement.

### Industrial Applicability

The present invention is applicable to a voice-input assisting unit for inputting setting items for navigating a traveling of a vehicle from a departure point to a destination into a navigator through a voice input, a method thereof, a program thereof, a recording medium containing the program and a navigator.

## Claims

1. A voice-input assisting unit (181) for use in a navigator (100), the navigator navigating a movable body travelling from a departure point to a destination point based on map information (VM, MM), a menu item from an operating menu for navigating the movable body being input to the navigator through a voice input, the navigator including:
a conversion database (172) having a table structure that stores, using a common data structure, a plurality of menu items (210), each particular menu item having associated therewith related-word information (220) comprising words related to the particular menu item; and
a related menu items selecting database (173) having a table structure that stores, using a common data structure, the menu items each having associated therewith menu item-explaining information (310) being an explanation of the menu item and operation-content information (320) being information about an operation for executing the menu item;
the voice-input assisting unit comprising:
an audio-signal acquirer (181 A) that acquires an audio signal corresponding to the voice input;
a menu item selector (181D) that, based on the audio signal and the menu items in the conversion database, computes a probability that the voice input matches a menu item and retrieves a selected menu item in a manner corresponding to the probability;
a related menu item selector (181E) that retrieves, from the related menu items selecting database, a related other menu item based on the menu item-explaining information and the operation-content information associated with the selected retrieved menu item; and
a notification controller (181F) that associates the menu item selected by the menu item selector with the related other menu item retrieved by the related menu item selector and controls a notifier (140, 150) to request that at least one of the menu item and the related other menu item be confirmed.

2. The voice-input assisting unit (181) according to Claim 1, wherein
the related word information (220) in the conversion database (172) includes words included in the menu item and synonym words thereof.

3. The voice-input assisting unit (181) according to Claim 1 or 2, wherein
the menu item selector (181D) recognizes the related words that are identical to words contained in the audio signal based on the related-word information (220) of the conversion database, computes an occurrence frequency of each related word in the related-word information, computes a total value of the occurrence frequency for all related words as a score value, and computes the score value as the probability, the total value being a value of the menu item with which the related words are associated.

4. The voice-input assisting unit (181) according to any one of Claims 1 to 3, wherein
the related menu items selecting database (173) is structured such that travel-status information and device information are associated with the menu items, the travel-status information being information about an event of a travel status of the movable body when the navigator (100) operated by the menu item navigates the movable body, the device information being information about operation status of the navigator.

5. The voice-input assisting unit (181) according to Claim 4, further comprising:
a travel-status information acquirer (181A) that acquires the travel-status information about the travel status of the movable body; and
an operation-status-information acquirer (181C) that acquires operation status information about the operation status of the navigator (100), wherein
the menu item selector (181D) computes the probability of the menu item based on the related menu items selecting database (173), the travel-status information acquired by the travel-status information acquirer and the operation status information acquired by the operation-status information acquirer.

6. The voice-input assisting unit (181) according to Claim 5, wherein
the menu item selector (181D): recognizes the related words that are identical to words contained in the audio signal; computes an occurrence frequency of each related word in the related-word information (220); computes a total value of the occurrence frequency for all related words as a score value, the total value being a value of the menu item with which the related words are associated; performs a computation to increase or decrease the score value in accordance with the travel-status information and the device information in the related menu items selecting database (173) based on the travel-status information of the movable body and the operation status information of the navigator (100) per menu item; and computes the score value as the probability.

7. The voice-input assisting unit (181) according to any one of Claims 1 to 6, wherein
the related menu item selector (181E): retrieves the selected menu item retrieved by the menu item selector (181D); retrieves related operation-content information (320) related to the operation-content information of the retrieved menu item; and retrieves a menu item with which the retrieved related operation-content information is associated as a related other menu item.

8. The voice-input assisting unit (181) according to Claim 7, wherein
the related menu item selector (181E) retrieves the related operation-content information (320) containing words that are identical to words contained in the operation-content information of the selected menu item retrieved by the menu item selector (181D), the related menu item selector retrieving the operation-content information as related operation-content information.

9. The voice-input assisting unit (181) according to Claim 7 or 8, wherein
the related menu items selecting database (173) is structured such that travel-status information and device information are associated with the menu items, the travel-status information being information about an event of a traveling state of the movable body when the navigator (100) operated by the menu item navigates the movable body, the device information being information about operation status of the navigator, and
the related menu item selector (181E) retrieves the travel-state information and the device information containing words that are identical to words contained in the travel-state information and the device information of the selected menu item retrieved by the menu item selector (181D), and retrieves a menu item with which at least either one of the retrieved travel-state information and the retrieved device information is associated as a related other menu item.

10. The voice-input assisting unit (181) according to any one of Claims 7 to 9, wherein
the notification controller (181F) notifies the menu item retrieved by the menu item selector (181D) in accordance with the probability, and
the related menu item selector (181E) retrieves the menu item notified by the notification controller matching the voice input, and retrieves the related other menu item based on the menu item-explaining information (310) and the operation-content information (320) of the retrieved menu item.

11. The voice-input assisting unit (181) according to any one of Claims 1 to 10, wherein
the notification controller (181F) notifies an associated combination of the menu item and the related other menu item in accordance with largeness of the probability, and controls the notifier (140, 150) to notify a notification for requesting confirmation that one of the menu item or the related other menu item should be input.

12. A method of assisting a voice input for use in a navigator (100), the navigator navigating a movable body travelling from a departure point to a destination point based on map information (VM, MM), a menu item from an operating menu for navigating the movable body being input to the navigator through a voice input, the method comprising:
using: a conversion database (172) having a table structure that stores, using a common data structure, a plurality of menu items (210), each particular menu item having associated therewith related-word information (220) comprising words related to the particular menu item; and a related menu items selecting database (173) having a table structure that stores, using a common data structure, the menu items each having associated therewith menu item-explaining information (310) being an explanation of the menu item and operation-content information (320) being information about an operation for executing the menu item;
acquiring (S101) an audio signal output by a sound collector (160), the audio signal corresponding to the voice input;
computing (S102) a probability that the voice input matches a menu item, based on the audio signal and the menu items in the conversion database, and retrieving a selected menu item in a manner corresponding to the probability;
retrieving (S112), from the related menu items selecting database, a related other menu item based on the menu item-explaining information and the operation-content information associated with the selected retrieved menu item; and
associating (S113) the menu item having been selected with the related other menu item, and controlling (S 114) a notifier (140, 150) to request that at least one of the menu item and the related other menu item be confirmed.

13. A voice-input assisting program for operating an operation unit to execute the method of assisting a voice input according to Claim 12.

14. A recording medium in which the voice-input assisting program according to Claim 13 is stored in a manner readable by an operation unit.

15. A navigator (100), comprising:
a sound collector (160) that outputs an audio signal corresponding to a voice input;
the voice-input assisting unit (181) according to any one of Claims 1 to 11 for acquiring the audio signal output by the sound collector, the audio signal corresponding to the voice input;
a travel-status retriever (110) for retrieving a travel status of a movable body; and
a navigation notification controller (182) for conducting navigation based on a menu item input by the voice-input assisting unit and map information (VM, MM), the navigation notification controller controlling a notifier (140, 150) to notify a travel state of the movable body in accordance with the travel status of the movable body retrieved by the travel-status retriever.

## Patentansprüche

1. Unterstützungseinheit (181) für Spracheingabe zur Verwendung in einem Navigationsgerät (100), wobei das Navigationsgerät einen beweglichen Körper navigiert, der sich, auf Karteninformation (VM, MM) beruhend, von einem Ausgangspunkt zu einem Zielpunkt bewegt, wobei ein Menüpunkt aus einem Operationsmenü zur Navigation des beweglichen Körpers in das Navigationsgerät durch eine Spracheingabe eingegeben wird, wobei das Navigationsgerät einschließt:
eine Umwandlungsdatenbank (172) mit einer Tabellenstruktur, die, unter Einsatz einer üblichen Datenstruktur, eine Vielheit von Menüpunkten (210) speichert, wobei jeder spezielle Menüpunkt mit wortverwandter Information (220) assoziiert ist, die Wörter umfasst, die mit dem speziellen Menüpunkt in Bezug stehen; und
eine Datenbank (173), die verwandte Menüpunkte selektiert, die eine Tabellenstruktur aufweist, welche, unter Einsatz der üblichen Datenstruktur, die Menüpunkte speichert, wobei jeder der Menüpunkte mit Menüpunkten erläuternder Information (310), die eine Erläuterung des Menüpunkts ist und mit Operationsinhaltsinformation (320) assoziiert ist, die Information über eine Operation zur Ausführung des Menüpunkts ist;
wobei die Unterstützungseinheit für Spracheingabe umfasst:
ein Erfassungsbauelement (181A) für Audiosignale, das ein, der Spracheingabe entsprechendes, Audiosignal erfasst;
einen Menüpunktselektor (181D) der, auf dem Audiosignal und den Menüpunkten in der Umwandlungsdatenbank beruhend, eine Wahrscheinlichkeit berechnet, dass die Spracheingabe mit einem Menüpunkt übereinstimmt und einen selektierten Menüpunkt auf eine der Wahrscheinlichkeit entsprechende Weise abruft;
einen Selektor (181E) für verwandte Menüpunkte, der, aus der Datenbank zum Selektieren verwandter Menüpunkte, einen verwandten anderen Menüpunkt abruft, der auf Menüpunkt erläuternder Information und der Operationsinhaltsinformation beruht, die mit dem selektierten abgerufenen Menüpunkt assoziiert ist; und
einen Anzeigecontroller (181F), der den Menüpunkt, der vom Menüpunktselektor selektiert wurde, mit dem verwandten anderen Menüpunkt assoziiert, der vom verwandten Menüpunktselektor abgerufen wurde, und steuert ein Anzeigebauelement (140, 150) aufzufordern, dass zumindest eins des Menüpunkts und des verwandten anderen Menüpunkts bestätigt wird.

2. Unterstützungseinheit (181) für Spracheingabe nach Anspruch 1, wobei
die verwandte Wortinformation (220) in der Umwandlungsdatenbank (172) im Menüpunkt inbegriffene Wörter und synonyme Wörter davon einschließt.

3. Unterstützungseinheit (181) für Spracheingabe nach Anspruch 1 oder 2, wobei
der Menüpunktselektor (181D) die verwandten Wörter erkennt, die mit Wörtern identisch sind, die im Audiosignal, auf der wortverwandten Information (220) der Umwandlungsdatenbank beruhend, enthalten sind, eine Auftrittshäufigkeit jedes verwandten Worts in der wortverwandten Information berechnet, einen Gesamtwert der Auftrittshäufigkeit für alle verwandten Wörter als einen Score-Wert berechnet und den Score-Wert, als die Wahrscheinlichkeit berechnet, wobei der Gesamtwert ein Wert des Menüpunkts ist, mit dem die verwandten Wörter assoziiert sind.

4. Unterstützungseinheit (181) für Spracheingabe nach Anspruch 1 bis 3, wobei
die Datenbank (173) zum Selektieren verwandter Menüpunkte derart strukturiert ist, dass Fahrtzustandsinformation und Geräteinformation mit den Menüpunkten assoziiert werden, wobei die Fahrtzustandsinformation Information über ein Ereignis eines Fahrtzustands des beweglichen Körpers ist, wenn das durch den Menüpunkt betätigte Navigationsgerät (100) den beweglichen Körper navigiert, wobei die Geräteinformation, Information über den Betriebszustand des Navigationsgeräts ist.

5. Unterstützungseinheit (181) für Spracheingabe nach Anspruch 4, weiter umfassend:
ein Erfassungsbauelement (181A) für Fahrtzustandsinformation, das die Fahrtzustandsinformation über den Fahrtzustand des beweglichen Körpers erfasst; und
ein Erfassungsbauelement (181C) für Betriebszustandsinformation, das Betriebszustandsinformation über den Betriebszustand des Navigationsgeräts (100) erfasst, wobei
der Menüpunktselektor (181D) die Wahrscheinlichkeit des Menüpunkts, auf der Datenbank (173) zum Selektieren verwandter Menüpunkte, der vom Erfassungsbauelement für Fahrtzustandsinformation erfassten Fahrtzustandsinformation und der vom Erfassungsbauelement für Betriebszustandsinformation erfassten Betriebszustandsinformation beruhend, berechnet.

6. Unterstützungseinheit (181) für Spracheingabe nach Anspruch 5, wobei
der Menüpunktselektor (181 D), die verwandten Wörter erkennt, die mit im Audiosignal enthaltenen Wörtern identisch sind; eine Auftrittshäufigkeit jedes verwandten Worts in der wortverwandten Information (220) berechnet; einen Gesamtwert der Auftrittshäufigkeit für alle verwandten Wörter als einen Score-Wert berechnet, wobei der Gesamtwert ein Wert des Menüpunkts ist, mit dem die verwandten Wörter assoziiert sind; eine Berechnung zum Erhöhen oder Verringern des Score-Werts in Übereinstimmung mit der Fahrtzustandsinformation und der Geräteinformation in der Datenbank (173) zum Selektieren verwandter Menüpunkte, auf der Fahrtzustandsinformation des beweglichen Körpers und der Betriebszustandsinformation des Navigationsgeräts (100) beruhend, pro Menüpunkt durchführt; und den Score-Wert, als die Wahrscheinlichkeit berechnet.

7. Unterstützungseinheit (181) für Spracheingabe nach einem beliebigen der Ansprüche 1 bis 6, wobei
der Selektor (181E) für verwandte Menüpunkte: den selektierten Menüpunkt abruft, der vom Selektor (181D) für Menüpunkte abgerufen wurde; die verwandte Operationsinhaltsinformation (320) abruft, die mit der Operationsinhaltsinformation des abgerufenen Menüpunkts verwandt ist; und einen Menüpunkt abruft, mit dem die abgerufene verwandte Operationsinhaltsinformation als ein verwandter anderer Menüpunkt assoziiert ist.

8. Unterstützungseinheit (181) für Spracheingabe nach Anspruch 7, wobei
der Selektor (181E) für verwandte Menüpunkte die verwandte Operationsinhaltsinformation (320) abruft, die Worte enthält, die mit Worten identisch sind, die in der Operationsinhaltsinformation des selektierten Menüpunkts enthalten sind, der vom Selektor (181D) für selektierte Menüpunkte abgerufenen wurde, wobei der Selektor für verwandte Menüpunkte die Operationsinhaltsinformation als verwandte Operationsinhaltsinformation. abruft

9. Unterstützungseinheit (181) für Spracheingabe nach Anspruch 7 oder 8, wobei
die Datenbank (173) zum Selektieren verwandter Menüpunkte derart strukturiert ist, dass Fahrtzustandsinformation und Geräteinformation mit den Menüpunkten assoziiert werden, wobei die Fahrtzustandsinformation, Information über ein Ereignis eines Fahrtzustands des beweglichen Körpers ist, wenn das durch den Menüpunkt betätigte Navigationsgerät (100) den beweglichen Körper navigiert, wobei die Geräteinformation, Information über den Betriebszustand des Navigationsgeräts ist, und
der Selektor (181E) für verwandte Menüpunkte die Fahrtzustandsinformation und die Geräteinformation abruft, die Wörter enthalten, die mit Wörtern identisch sind, die in der Fahrtzustandsinformation und der Geräteinformation des selektierten Menüpunkts enthalten sind, der vom Selektor (181D) für Menüpunkte abgerufen wurde, und einen Menüpunkt abruft, mit dem zumindest eine der abgerufenen Fahrtzustandsinformation und der abgerufenen Geräteinformation als ein verwandter anderer Menüpunkt assoziiert ist.

10. Unterstützungseinheit (181) für Spracheingabe nach Anspruch 7 bis 9, wobei
der Anzeige-Controller (181F) den vom Selektor (181D) abgerufenen Menüpunkt in Übereinstimmung mit der Wahrscheinlichkeit anzeigt, und
der Selektor (181E) für verwandte Menüpunkte den Menüpunkt abruft, der vom Anzeige-Controller als übereinstimmend mit der Spracheingabe angezeigt wurde, und ruft den verwandten anderen Menüpunkt, auf der Menüpunkt erläuternden Information (310) und der Operationsinhaltsinformation (320) des abgerufenen Menüpunkts beruhend, ab.

11. Unterstützungseinheit (181) für Spracheingabe nach Anspruch 1 bis 10, wobei
der Anzeige-Controller (181F) eine assoziierte Kombination des Menüpunkts und des verwandten anderen Menüpunkts in Übereinstimmung mit der Größe der Wahrscheinlichkeit anzeigt, und das Anzeigebauelement (140, 150) steuert, eine Anzeige für die Aufforderung der Bestätigung, dass einer des Menüpunkts oder des verwandten anderen Menüpunkts eingegeben werden sollte, anzuzeigen.

12. Verfahren zur Unterstützung einer Spracheingabe zur Verwendung in einem Navigationsgerät (100), wobei das Navigationsgerät einen beweglichen Körper navigiert, der sich, auf Karteninformation (VM, MM) beruhend, von einem Ausgangspunkt zu einem Zielpunkt bewegt, wobei ein Menüpunkt aus einem Operationsmenü zur Navigation des beweglichen Körpers in das Navigationsgerät durch eine Spracheingabe eingegeben wird, wobei das Verfahren umfasst:
Verwendung: einer Umwandlungsdatenbank (172) mit einer Tabellenstruktur, die, unter Einsatz einer üblichen Datenstruktur, eine Vielheit von Menüpunkten (210) speichert, wobei jeder spezielle Menüpunkt damit assoziierte wortverwandte Information (220) aufweist, die mit dem speziellen Menüpunkt verwandte Wörter umfasst; und einer Datenbank (173) zum Selektieren verwandter Menüpunkte mit einer Tabellenstruktur, die, unter Einsatz einer üblichen Datenstruktur, die Menüpunkte speichert, wobei jeder damit assoziierte Menüpunkt erläuternde Information (310), die eine Erläuterung des Menüpunkts ist und Operationsinhaltsinformation (320) aufweist, die Information über eine Operation zur Ausführung des Menüpunkts ist;
Erfassen (S101) eines Audiosignalausgangs durch einen Schallkollektor (160), wobei das Audiosignal der Spracheingabe entspricht;
Berechnen (S102) einer Wahrscheinlichkeit, dass die Spracheingabe mit einem Menüpunkt übereinstimmt, auf dem Audiosignal und den Menüpunkten in der Umwandlungsdatenbank beruhend, und Abrufen eines selektierten Menüpunkts auf eine Weise, die der Wahrscheinlichkeit entspricht;
Abrufen (S112), aus der Datenbank zum Selektieren verwandter Menüpunkte, eines verwandten anderen Menüpunkts, der auf Menüpunkt erläuternder Information und der Operationsinhaltsinformation beruht, die mit dem selektierten abgerufenen Menüpunkt assoziiert ist; und
Assoziieren (S113) des Menüpunkts, der mit dem verwandten anderen Menüpunkt selektiert worden ist, und Steuern (S114) eines Anzeigebauelements (140, 150), um aufzufordern, dass zumindest einer des Menüpunkts und des verwandten anderen Menüpunkts bestätigt wird.

13. Unterstützungsprogramm für Spracheingabe zum Betreiben einer Bedieneinheit zur Ausführung des Verfahrens zum Unterstützen einer Spracheingabe nach Anspruch 12.

14. Aufzeichnungsmedium, in dem das Unterstützungsprogramm für Spracheingabe nach Anspruch 13, das auf eine Weise gespeichert ist, die von einer Bedieneinheit lesbar ist.

15. Navigationsgerät (100), umfassend:
einen Schallkollektor (160), der ein Audiosignal ausgibt, das einer Spracheingabe entspricht;
Unterstützungseinheit (181) für Spracheingabe nach einem beliebigen der Ansprüche 1 bis 11 zum Erfassen der Audiosignalausgabe durch den Schallkollektor, wobei das Audiosignal der Spracheingabe entspricht;
ein Abrufbauelement (110) für Fahrtzustand zum Abrufen eines Fahrtzustands eines beweglichen Körpers;
und
einen Navigationsanzeige-Controller (182) zur Durchführung von Navigation, auf einer Menüpunkteingabe seitens der Unterstützungseinheit für Spracheingabe und Karteninformation (VM, MM) beruhend, wobei der Navigationsanzeige-Controller ein Anzeigebauelement (140, 150) steuert, um einen Fahrzustand des beweglichen Körpers in Übereinstimmung mit dem Fahrtzustand des beweglichen Körpers zu benachrichtigen, der vom Abrufbauelement für Fahrtzustand abgerufen wurde.

## Revendications

1. Unité d'assistance de saisie vocale (181) destinée à une utilisation dans un navigateur (100), le navigateur assurant la navigation d'un corps mobile qui se déplace depuis un point de départ jusqu'à un point de destination sur la base d'informations cartographiques (VM, MM), d'une option de menu issue d'un menu opérationnel pour assurer la navigation du corps mobile qui est en train d'être introduite dans le navigateur par l'intermédiaire d'une saisie vocale, le navigateur comportant :
une base de données de conversion (172) avec une structure tabulaire qui, grâce à l'utilisation d'une structure de données commune, stocke une pluralité d'options de menu (210), chaque option de menu particulière ayant des informations de mots apparentés qui lui sont associées (220) comprenant des mots apparentés à l'option de menu particulière ; et
une base de données de sélection d'options de menu apparentées (173) avec une structure tabulaire qui, grâce à l'utilisation d'une structure de données commune, stocke les options de menu, chacune ayant des informations explicatives des options de menu qui lui sont associées (310), lesquelles constituent une explication de l'option de menu, ainsi que des informations de contenu opérationnel (320), lesquelles constituent des informations au sujet d'une opération pour exécuter l'option de menu ;
l'unité d'assistance de saisie vocale comprenant :
un dispositif acquéreur de signaux audio (181A) pour acquérir un signal audio correspondant à la saisie vocale ;
un sélecteur d'options de menu (181D) qui, sur la base du signal audio et des options de menu figurant dans la base de données de conversion, calcule une probabilité suivant laquelle la saisie vocale concorde avec une option de menu et récupère une option de menu sélectionnée d'une manière qui correspond à la probabilité ;
un sélecteur d'options de menu apparentées (181E) qui récupère, à partir de la base de données de sélection d'options de menu apparentées, une autre option de menu apparentée sur la base des informations explicatives des options de menu et des informations de contenu opérationnel qui sont associées à l'option de menu récupérée ayant été sélectionnée ; et
un contrôleur de notifications (181F) qui associe l'option de menu sélectionnée par le sélecteur d'options de menu à l'autre option de menu apparentée récupérée par le sélecteur d'options de menu apparentées et pilote un dispositif notificateur (140, 150) pour exiger que l'une au moins des options, à savoir l'option de menu et l'autre option de menu apparentée, soit confirmée.

2. Unité d'assistance de saisie vocale (181) selon la revendication 1,
les informations de mots apparentés (220) figurant dans la base de données de conversion (172) englobant des mots qui sont inclus dans l'option de menu et des mots synonymes de ceux-ci.

3. Unité d'assistance de saisie vocale (181) selon la revendication 1 ou 2,
le sélecteur d'options de menu (181D) reconnaissant les mots apparentés qui sont identiques aux mots contenus dans le signal audio sur la base des informations de mots apparentés (220) figurant dans la base de données de conversion, calculant une fréquence d'occurrence de chaque mot apparenté dans les informations de mots apparentés, calculant une valeur totale de la fréquence d'occurrence pour tous les mots apparentés sous la forme d'une valeur-score, et calculant la valeur-score comme étant la probabilité, la valeur totale étant une valeur de l'option de menu à laquelle les mots apparentés sont associés.

4. Unité d'assistance de saisie vocale (181) selon l'une quelconque des revendications 1 à 3,
la base de données de sélection d'options de menu apparentées (173) étant structurée de sorte que des informations d'état de déplacement ainsi que des informations de dispositif sont associées aux options de menu, les informations d'état de déplacement étant des informations au sujet d'un événement d'un état de déplacement du corps mobile lorsque le navigateur (100) exploité par l'option de menu assure la navigation du corps mobile, alors que les informations de dispositif sont des informations au sujet d'un état d'exploitation du navigateur.

5. Unité d'assistance de saisie vocale (181) selon la revendication 4, comprenant en outre :
un dispositif acquéreur d'informations d'état de déplacement (181A) qui assure l'acquisition d'informations d'état de déplacement au sujet de l'état de déplacement du corps mobile ; et
un dispositif acquéreur d'informations d'état d'exploitation (181C) qui assure l'acquisition d'informations d'état d'exploitation au sujet de l'état d'exploitation du navigateur (100), cas dans lequel
le sélecteur d'options de menu (181D) calcule la probabilité de l'option de menu fondée sur la base de données de sélection d'options de menu apparentées (173), des informations d'état de déplacement acquises par le dispositif acquéreur d'informations d'état de déplacement et des informations d'état d'exploitation acquises par le dispositif acquéreur d'informations d'état d'exploitation.

6. Unité d'assistance de saisie vocale (181) selon la revendication 5,
le sélecteur d'options de menu (181D) reconnaissant les mots apparentés qui sont identiques aux mots contenus dans le signal audio ; calculant une fréquence d'occurrence de chaque mot apparenté dans les informations de mots apparentés (220) ; calculant une valeur totale de la fréquence d'occurrence pour tous les mots apparentés sous la forme d'une valeur-score, la valeur totale étant une valeur de l'option de menu à laquelle les mots apparentés sont associés ; effectuant un calcul pour accroître ou diminuer la valeur-score en conformité avec les informations d'état de déplacement et les informations de dispositif dans la base de données de sélection d'options de menu apparentées (173) sur la base des informations d'état de déplacement du corps mobile et des informations d'état d'exploitation du navigateur (100) par option de menu ; et calculant la valeur-score comme étant la probabilité.

7. Unité d'assistance de saisie vocale (181) selon l'une quelconque des revendications 1 à 6,
le sélecteur d'options de menu apparentées (181E) récupérant l'option de menu sélectionnée ayant été récupérée par le sélecteur d'options de menu (181D) ; récupérant des informations de contenu opérationnel apparentées (320) qui sont apparentées aux informations de contenu opérationnel de l'option de menu récupérée ; et récupérant une option de menu, à laquelle sont associées les informations de contenu opérationnel apparentées ayant été récupérées, sous la forme d'une autre option de menu apparentée.

8. Unité d'assistance de saisie vocale (181) selon la revendication 7,
le sélecteur d'options de menu apparentées (181E) récupérant les informations de contenu opérationnel apparentées (320) lesquelles contiennent des mots qui sont identiques aux mots contenus dans les informations de contenu opérationnel de l'option de menu sélectionnée ayant été récupérée par le sélecteur d'options de menu (181D), alors que le sélecteur d'options de menu apparentées récupère des informations de contenu opérationnel comme étant des informations de contenu opérationnel apparentées.

9. Unité d'assistance de saisie vocale (181) selon la revendication 7 ou 8,
la base de données de sélection d'options de menu apparentées (173) étant structurée de sorte que des informations d'état de déplacement ainsi que des informations de dispositif sont associées aux options de menu, les informations d'état de déplacement étant des informations au sujet d'un événement d'un état de déplacement du corps mobile lorsque le navigateur (100) exploité par l'option de menu assure la navigation du corps mobile, alors que les informations de dispositif sont des informations au sujet d'un état d'exploitation du navigateur, et
le sélecteur d'options de menu apparentées (181E) récupérant les informations d'état de déplacement et les informations de dispositif lesquelles contiennent des mots qui sont identiques aux mots contenus dans les informations d'état de déplacement et les informations de dispositif de l'option de menu sélectionnée ayant été récupérée par le sélecteur d'options de menu (181D), et récupérant une option de menu, à laquelle est associée au moins l'une ou l'autre des informations suivantes, à savoir les informations d'état de déplacement récupérées et les informations de dispositif récupérées, sous la forme d'une autre option de menu apparentée.

10. Unité d'assistance de saisie vocale (181) selon l'une quelconque des revendications 7 à 9,
le contrôleur de notifications (181F) notifiant l'option de menu récupérée par le sélecteur d'options de menu (181D) en conformité avec la probabilité, et
le sélecteur d'options de menu apparentées (181E) récupérant l'option de menu notifiée par le contrôleur de notifications qui concorde avec la saisie vocale, et récupérant l'autre option de menu apparentée sur la base des informations explicatives des options de menu (310) et des informations de contenu opérationnel (320) relatives à l'option de menu récupérée.

11. Unité d'assistance de saisie vocale (181) selon l'une quelconque des revendications 1 à 10,
le contrôleur de notifications (181F) notifiant une combinaison associée composée de l'option de menu et de l'option de menu apparentée en conformité avec la grandeur de la probabilité, et pilotant le dispositif notificateur (140, 150) pour signaler une notification visant à demander confirmation pour que l'une des options suivantes, à savoir l'option de menu ou l'autre option de menu apparentée, soit saisie.

12. Procédé servant à assister une saisie vocale destiné à une utilisation dans un navigateur (100), le navigateur assurant la navigation d'un corps mobile qui se déplace depuis un point de départ jusqu'à un point de destination sur la base d'informations cartographiques (VM, MM), d'une option de menu issue d'un menu opérationnel pour assurer la navigation du corps mobile qui est en train d'être introduite dans le navigateur par l'intermédiaire d'une saisie vocale, le procédé comprenant les opérations consistant à:
utiliser une base de données de conversion (172) avec une structure tabulaire qui, grâce à l'utilisation d'une structure de données commune, stocke une pluralité d'options de menu (210), chaque option de menu particulière ayant des informations de mots apparentés qui lui sont associées (220) comprenant des mots apparentés à l'option de menu particulière ; et une base de données de sélection d'options de menu apparentées (173) avec une structure tabulaire qui, grâce à l'utilisation d'une structure de données commune, stocke les options de menu, chacune ayant des informations explicatives des options de menu qui lui sont associées (310), lesquelles constituent une explication de l'option de menu, ainsi que des informations de contenu opérationnel (320), lesquelles constituent des informations au sujet d'une opération pour exécuter l'option de menu ;
acquérir (S101) un signal audio produit par un dispositif collecteur de sons (160), le signal audio correspondant à la saisie vocale ;
calculer (S102) une probabilité suivant laquelle la saisie vocale concorde avec une option de menu, sur la base du signal audio et des options de menu figurant dans la base de données de conversion, et récupérer une option de menu sélectionnée d'une manière qui correspond à la probabilité ;
récupérer (S112), à partir de la base de données de sélection d'options de menu apparentées, une autre option de menu apparentée sur la base des informations explicatives des options de menu et des informations de contenu opérationnel qui sont associées à l'option de menu récupérée ayant été sélectionnée ; et
associer (S113) l'option de menu ayant été sélectionnée à l'autre option de menu apparentée, et piloter (S 114) un dispositif notificateur (140, 150) pour exiger que l'une au moins des options, à savoir l'option de menu et l'autre option de menu apparentée, soit confirmée.

13. Programme d'assistance pour saisie vocale permettant d'exploiter une unité opérationnelle afin d'exécuter le procédé servant à assister une saisie vocale selon la revendication 12.

14. Support d'enregistrement dans lequel le programme d'assistance pour saisie vocale, selon la revendication 13, est stocké suivant une manière qui est lisible par une unité opérationnelle.

15. Navigateur (100), comprenant :
un dispositif collecteur de sons (160) qui produit un signal audio correspondant à une saisie vocale ;
l'unité d'assistance de saisie vocale (181) selon l'une quelconque des revendications 1 à 11, pour acquérir le signal audio produit par le dispositif collecteur de sons, le signal audio correspondant à la saisie vocale ;
un dispositif récupérateur d'état de déplacement (110) pour récupérer un état de déplacement d'un corps mobile ; et
un contrôleur de notification de navigation (182) pour diriger la navigation sur la base d'une saisie d'option de menu faite par l'unité d'assistance de saisie vocale et d'informations cartographiques (VM, MM), le contrôleur de notification de navigation pilotant un dispositif notificateur (140, 150) pour signaler un état de déplacement du corps mobile en conformité avec l'état de déplacement du corps mobile ayant été récupéré par le dispositif récupérateur d'état de déplacement.
